# EUROPEAN PATENT SPECIFICATION

(11) **EP 4 217 842 B1**
(45) Date of publication and mention of the grant of the patent: **05.03.2025**
(21) Application number: 21806922.7
(22) Date of filing: 06.10.2021
(51) Int. Cl.: G06F 3/04842

(54) **MANAGEMENT OF SCREEN CONTENT CAPTURE**
VERWALTUNG DER BILDSCHIRMINHALTSERFASSUNG
GESTION DE CAPTURE DE CONTENU D'ÉCRAN

(30) Priority: 30.12.2020 US 202017247914
(43) Date of publication of application: 02.08.2023
(73) Proprietor: Google LLC, Mountain View, CA 94043 (US)
(72) Inventor: ZADINA, Gabrielle, Mountain View, California 94043 (US); ZHANG, Fan, Mountain View, California 94043 (US); FAKHRY, Ahmed, Mountain View, California 94043 (US); KIM, Gary Hyun Jin, Mountain View, California 94043 (US); XIA, Xiyuan, Mountain View, California 94043 (US)
(74) Representative: Seymour-Pierce, Alexandra Isobel
(86) International application number: PCT/US2021/071733
(87) International publication number: WO 2022/147377

(56) References cited:
- CN-A- 108 449 625
- US-A1- 2020 151 345
- TECHSMITH: "Snagit Help", 30 June 2020 (2020-06-30), XP055877169, Retrieved from the Internet <URL:https://www.techsmith.com/blog/wp-content/uploads/2021/07/Snagit2020.1.3-Help.pdf> [retrieved on 20220110]

## Description

### CROSS REFERENCE TO RELATED APPLICATION

This application is a continuation of and claims priority to U.S. Application No. 17/247,914, filed December 30, 2020.

### BACKGROUND

Conventional screen content capture systems and methods may provide for the capture of image content displayed on a screen. For example, a user of a computing device may launch screen content capture functionality, or screenshot functionality, of the computing device through one or more shortcuts, series of inputs and the like. The user may then access the captured screenshot in a storage location within a file management system of the computing device. The user may access these types of conventional screen content capture and management systems without the benefit of a user interface (UI) that facilitates the capture of screen content, and the access to and management of the screen content after capture.

TechSmith "Snagit Help" (XP055877169, 30 June 2020, retrieved from URL:https://www.techsmith.com/blog/wp-content/uploads/2021/07/Snagit2020.1.3-Help.pdf) discloses to capture a screenshot or video of anything on your screen with Snagit.

US 2020/151345 A1 discloses a method for mediation of a screenshot capture by a client application based on policy. The method includes identifying, by a client application on a client device, a policy for mediating one or more screenshots of content displayed via the client application. An embedded browser within the client application accesses a network application of one or more servers. The method further includes intercepting, by the client application, a request to capture a screenshot of at least a portion of the network application being displayed, determining, by the client application, one or more mediation actions to perform on the screenshot responsive to the policy, performing, by the client application, the one or more mediation actions on the screenshot, and providing, by the client responsive to the request, the screenshot resulting from the one or more mediation actions.

CN 108 449 625 A discloses a video screen capturing method, a video screen capturing device and a terminal. The method comprises: acquiring a screen capturing request to a video, generating a screen capturing instruction according to the screen capturing request, storing the screen capturing instruction, and thereby executing the screen capturing instruction to generate corresponding screenshots.

### SUMMARY

The matter for protection is set out in appended method claim 1 and appended system claim 15, with optional features set out in the dependent claims appended thereto. Systems and methods, in accordance with implementations described herein, may function to facilitate access to screen capture functionality of a computing device. For example, systems and methods described herein may function to provide for more easily accessible screen capture functionality than conventional systems, making screen capture functionality accessible through a system menus of a computing device, a dedicated physical key of the computing device, through a launcher search of the computing device, from a shelf pod or tray, and the like. Systems and methods, in accordance with implementations described herein, cause a screen capture user interface (UI) to be generated for display to the user of the computing device when the screen capture mode is invoked. The screen capture UI provides for user selection of a screen capture mode including selection of a screenshot mode in which still image content is captured, or a screen recording mode in which moving image content, or video content, is recorded. The screen capture UI may provide for user selection of a user specified (or custom) screen capture area, a window or tab for capture, a page/full page for capture, or a full screen capture, with either the screenshot mode or the screen recording mode. In some examples, the screen capture UI may also provide for adjustment of the user specified screen capture area, adjustment of content captured within the user specified screen capture area, with either the screenshot mode or the screen recording mode. In some examples, the screen capture UI may also provide for selection of a scrolling screenshot mode, allowing for capture of long-form content by scrolling, for example manually scrolling or automatically scrolling, while in the screenshot mode. The screen capture UI as described herein may provide for simplified user access to expanded functionality within the screen capture functionality compared to conventional systems.

A system and method, in accordance with implementations described herein, may function to facilitate the use and management of captured screen content, post capture. For example, systems and methods as described herein may cause a quick action UI to be generated at the completion of screen content capture. The quick action UI may provide for the copying of captured content (a screenshot or screen recording) to a designated location, previewing of the captured content, editing of the captured content, sharing of the captured content, deleting of the captured content, and other such functionality, at the completion of screen capture. The quick action UI may expand on the functionality of conventional systems, and may improve user interaction with and management of screenshots and/or screen recordings, which are often captured by the user for immediate use and/or single use. The time and number of user inputs needed to manage or use the screenshots and/or screen recordings may therefore be reduced, which can facilitate a reduction in computational resources.

A system and method, in accordance with implementations described herein, may function to group multiple instances of screen content captured in the manner described above. The grouping of stacking of captured screen content may provide for batch sharing, editing, deleting and the like.

A system of one or more computers can be configured to perform particular operations or actions by virtue of having software, firmware, hardware, or a combination thereof installed on the system that in operation causes the system to perform the actions. One or more computer programs can be configured to perform particular operations or actions by virtue of including instructions that, when executed by data processing apparatus, cause the apparatus to perform the actions.

In a first general aspect, a computer-implemented method includes generating a screen capture user interface; detecting selection of a screen capture mode; and operating in the selected capture mode in response to detecting the selection of the screen capture mode. Operating in the selecting capture mode includes triggering operation in a first capture mode in response to detection of selection of the first capture mode, the first capture mode being a screenshot mode for capture of still image content output by a display of a computing device; and triggering operation in a second capture mode in response to detection of selection of the second capture mode, the second capture mode being a screen recording mode for capture of moving image content output by the display. In some examples, operating in the selected capture mode in response to detecting the selection of the screen capture mode comprises triggering operation of a content manager of the operating system in the selected screen capture mode and initiating a screen capture operation in response to detecting the selection of the screen capture mode. Optionally, triggering operation in a first capture mode comprises triggering operation of the content manager in a first capture mode. Optionally, triggering operation in a second capture mode comprises triggering operation of the content manager in a second capture mode.

In some implementations, triggering operation in the second capture mode includes triggering screen recording of video content including moving image content. In some implementations, triggering operation in the second capture mode includes triggering of screen recording of video content including only moving image content. In some implementations, triggering operation in the second capture mode includes triggering of screen recording of video content including moving image content and audio content associated with the video content. In some implementations, triggering screen recording of video content may include recording at least a portion of the moving image content output by the display and audio content associated with the moving image content output by the display. in some implementations, triggering screen recording of video content may include triggering operation of a microphone of the computing device and recording at least a portion of the moving image content output by the display and audio content detected by the microphone. In some implementations, triggering screen recording of video content can include the capture of audio content embedded in or inherent in the video content.

Generating the screen capture user interface includes generating a first section of the screen capture user interface providing for selection of the first capture mode or the second capture mode; and generating a second section of the screen capture user interface providing for selection of a screen capture area. Generating the second section of the screen capture user interface may include providing for selection of a full screen capture function, a custom capture function, or a window capture function. Detecting selection of the screen capture mode may include detecting selection of the custom capture function, the method further comprising defining a capture area associated with the display of content, including detecting a point input identifying an initial capture point of the capture area; detecting a drag input from the point input; detecting a release of the point input identifying a final capture point of the capture area; and defining the capture area based on a trajectory and a distance between the initial capture point and the final capture point. In some implementations, defining the capture area also includes detecting a first adjustment input at at least one of a corner of a boundary defining the capture area or a side of the boundary of the capture area; and adjusting at least one of a size or a shape of the capture area in response to the detected first adjustment input. Defining the capture area may also include detecting a second adjustment input within the boundary of the capture area; and adjusting content displayed within the boundary of the capture area in response to the second adjustment input.

Operating in the selected capture mode in response to detecting the selection of the screen capture mode includes operating in the second capture mode and capturing a screen recording of video content output in a screen recording capture area of the display in response to detection of the selection of the second capture mode; detecting a selection of the first capture mode while operating in the second capture mode; and triggering operation in the first capture mode and capturing a screenshot while capturing the screen recording. Detecting selection of the first capture mode while operating in the second capture mode may include detecting selection of a custom capture function defining a screenshot capture area within the screen recording, including detecting a point input identifying an initial capture point of the screenshot capture area; detecting a drag input from the point input; detecting a release of the point input identifying a final capture point of the screenshot capture area; and defining the screenshot capture area based on a trajectory and a distance between the initial capture point and the final capture point.

In some implementations, triggering operation in the first mode further includes detecting selection of screen capture area; capturing a screenshot of screen content included in the detected screen capture area in response to detecting the selection of the screen capture area; and storing the captured screenshot in a clipboard storage area of the computing device. In some implementations, triggering operation in the second capture mode comprises accessing a GPU of the computing device and recording one or more frames of the moving image content from the GPU.

In another general aspect, a non-transitory computer-readable storage medium includes instructions stored thereon that, when executed by at least one processor, are configured to cause a computing system to at least generate a screen capture user interface; detect selection of a screen capture mode; and operate in the selected capture mode in response to detecting the selection of the screen capture mode, including trigger operation in a first capture mode in response to detection of selection of the first capture mode, the first capture mode being a screenshot mode for capture of still image content output by a display of a computing device; and trigger operation in a second capture mode in response to detection of selection of the second capture mode, the second capture mode being a screen recording mode for capture of moving image content output by the display. In some examples, the instructions, when executed by the at least one processor, cause an operating system of the computing system to perform the above operations. Optionally, causing a computing system to operate in the selected capture mode in response to detecting the selection of the screen capture mode comprises causing the operating system of the computing system to operate a content manager of the operating system in the selected screen capture mode in response to detecting the selection of the screen capture mode.

In some implementations, in the second capture mode, the instructions may cause the computing system to trigger screen recording of video content including moving image content and audio content associated with the video content. In the second capture mode, the instructions may cause the computing system to trigger screen recording of video content including recording at least a portion of the moving image content output by the display and audio content associated with the moving image content output by the display. The instructions cause the computing device to generate the screen capture user interface including a first section of the screen capture user interface including user interface elements providing for selection of the first capture mode or the second capture mode; and a second section of the screen capture user interface including user interface elements providing for selection of a screen capture area, optionally including a full screen capture area, a custom screen capture area, or a window capture area.

In some implementations, the instructions cause the computing device to detect selection of the custom screen capture area, including detect a point input identifying an initial capture point of the screen capture area; detecting a drag input from the point input; detecting a release of the point input identifying a final capture point of the screen capture area; and defining the screen capture area based on a trajectory and a distance between the initial capture point and the final capture point. The instructions may cause the computing device to further define the screen capture area, including detect a first adjustment input at at least one of a corner of a boundary defining the screen capture area or a side of the boundary of the screen capture area; and adjust at least one of a size or a shape of the screen capture area in response to the detected first adjustment input. The instructions may cause the computing device to further define screen content captured within the screen capture area, including detect a second adjustment input within the boundary of the screen capture area; and adjust screen content displayed within the boundary of the screen capture area in response to the second adjustment input.

The instructions cause the computing device to operate in the selected capture mode, including operate in the second capture mode and capture a screen recording of video content output in a screen recording capture area of the display in response to detection of the selection of the second capture mode; detect a selection of the first capture mode while operating in the second capture mode; and trigger operation in the first capture mode and capture a screenshot while operating in the second capture mode and capturing the screen recording.

In some implementations, the instructions cause the computing device to detect selection of the first capture mode while operating in the second capture mode including detecting selection of a custom screen capture function defining a screenshot capture area within the screen recording area, including detect a point input identifying an initial capture point of the screenshot capture area; detect a drag input from the point input; detect a release of the point input identifying a final capture point of the screenshot capture area; and define the screenshot capture area based on a trajectory and a distance between the initial capture point and the final capture point.

In some implementations, which may be implemented together with any suitable combination of the above-described features, a computer program product or a non-transitory computer-readable storage medium may comprise instructions that, when executed by at least one processor, are configured to cause a computing system to perform the method described herein.

The details of one or more implementations are set forth in the accompanying drawings and the description below.

### BRIEF DESCRIPTION OF THE DRAWINGS

FIG. 1 is a schematic illustration of an example implementation of a screen capture user interface (UI) and a quick action UI.
FIG. 2 is a block diagram of an example computing system configured to generate and use a screen capture UI and a quick action UI, in accordance with implementations described herein.
FIG. 3A is a perspective view of an example computing device, FIG. 3B is a plan view of a base portion of the example computing device shown in FIG. 3A, and FIGS. 3C-3E are plan views of a display portion of the example computing device shown in FIG. 3A.
FIG. 4 is a plan view of the display portion of the example computing device shown in FIGS. 3A-3E, including an example screen capture UI in accordance with implementations described herein.
FIGS. 5A-5G sequentially illustrate an example capture of a screen recording by a system and method in accordance with implementations described herein.
FIGS. 6A-6C sequentially illustrate an example capture of a screenshot by a system and method in accordance with implementations described herein.
FIG. 7 is a plan view of the display portion of the example computing device shown in FIGS. 3A-3E, including an example quick action UI in accordance with implementations described herein.
FIG. 8 is a flowchart of an example process of capturing screen content in accordance with implementations described herein.
FIG. 9 shows an example of a computer device and a mobile computer device that can be used to implement the techniques described herein.
The use of similar or identical reference numbers in the various drawings is intended to indicate the presence of a similar or identical element or feature.

### DETAILED DESCRIPTION

This document describes screen capture functionality of a computing device in which a screen content capture mode may be invoked, and in which a screen capture area may be designated. The screen capture functionality allows for selection of a screenshot capture mode in which still image content is captured, or a screen recording capture mode in which moving image content, or video content, is captured. The screen capture functionality may allow for selection of a screen capture area, including selection of a full screen capture area, selection of a window or a tab for capture, or selection of a customized capture area. The screen capture functionality may allow for adjustment of boundaries defining the capture area and/or content captured within the boundaries of the capture area. In this way, a custom portion of the content displayed by the computing device may be captured by a user; this can reduce the computational resources needed to take the screen capture (as compared to a full screen capture, for example), as well as minimizing or eliminating the need for post-capture editing operations on the screen capture, which can further reduce the use of computational resources. The screen capture functionality may also provide for the preview, editing, sharing, saving, deleting and other such follow on actions in response to completion of the capture of screen content. The screen capture functionality may also allow for batch sharing, batch editing, batch deleting and/or batch saving of multiple instances of captured screen content. In some implementations, one or more user interfaces (UIs) may be generated and triggered for display to provide for the selection of the screen capture mode. In some implementations, one or more UIs may be generated and triggered for display to provide for the selection of the screen capture area. In some implementations, one or more UIs may be generated and triggered for display to facilitate the sharing, editing, storage, deleting and the like of captured screen content.

For example, in operation, the systems and methods described herein can generate one or more system level UIs, including, for example, a screen capture UI to provide ready access to screen capture functionality, and a quick action UI to provide ready access to tools for the management of captured screen content. These system level UIs may reduce a number of steps required to access and invoke screen capture functionality, and may expand features and functions of screen capture capability compared to that of conventional systems. These system level UIs may reduce a number of steps required to take action with respect to captured screen content, and may facilitate management of the captured screen content to preserve system resources. The use of a system level screen capture can also improve security as compared to performing screen capture using third party applications or programs, since the capture and storage of the screen capture is isolated within the system.

The systems and methods herein may solve the technical challenge(s) (e.g., problem(s)) of discoverability of the screen capture functionality of the computing device, and the management of captured screen content. A system is needed that provides users with easily discoverable and easily accessible screen capture functionality, so that the screen capture function can be quickly and easily located and launched by the user. Conventional systems often employ complicated combinations of button presses, shortcuts and the like that are not readily apparent and/or easily accessible to the user to invoke a screen capture function, relying on previous user knowledge and experience to invoke the screen capture function. Similarly, conventional systems often rely on the user's familiarity with numerous different system menus, functions and the like for the editing, sharing, storage and management of captured screen content.

The systems and methods described herein provide a technical solution to these technical problems by configuring the computer O/S to generate the screen capture UI and the quick action UI described herein. The OS may render the screen capture UI in response to a user invoking the screen capture functionality of the computing device to allow for quick selection of a screen capture mode and for selection of a screen content capture area. The OS may render the quick action UI in response to the completion of capture of screen content to allow for quick editing, sharing, storage, deleting and the like of captured screen content without having to access multiple different system menus, system applications, system storage areas and the like.

The technical solutions described herein may provide a technical effect of providing a screen capture UI and a quick action UI that may be widely adapted to a variety of devices including small devices such as wearables and mobile devices as well as larger devices including tablets, laptops, desktops, and the like. In some implementations, this type of screen capture UI and/or quick action UI may be generated at the operation system level. For such devices, the UIs described herein may provide an advantage of presenting the functionality and features available to the user at the point of screen content capture, and for follow on action after completion of screen content capture. The UIs described herein may provide for faster access to screen capture options and features without user intervention (i.e., automatically, in response to invoking the screen capture function and in response to completion of screen content capture) compared to conventional systems which typically rely on user access to numerous different system menus, applications, storage areas and the like to accomplish screen content capture and management. The time and number of user inputs needed to manage or use the screenshots and/or screen recordings may therefore be reduced, which can facilitate a reduction in computational resources. Moreover, the implementation at the operating system level can improve security as compared to performing screen capture using third party applications or programs, since the capture and storage of the screen capture is isolated within the system.

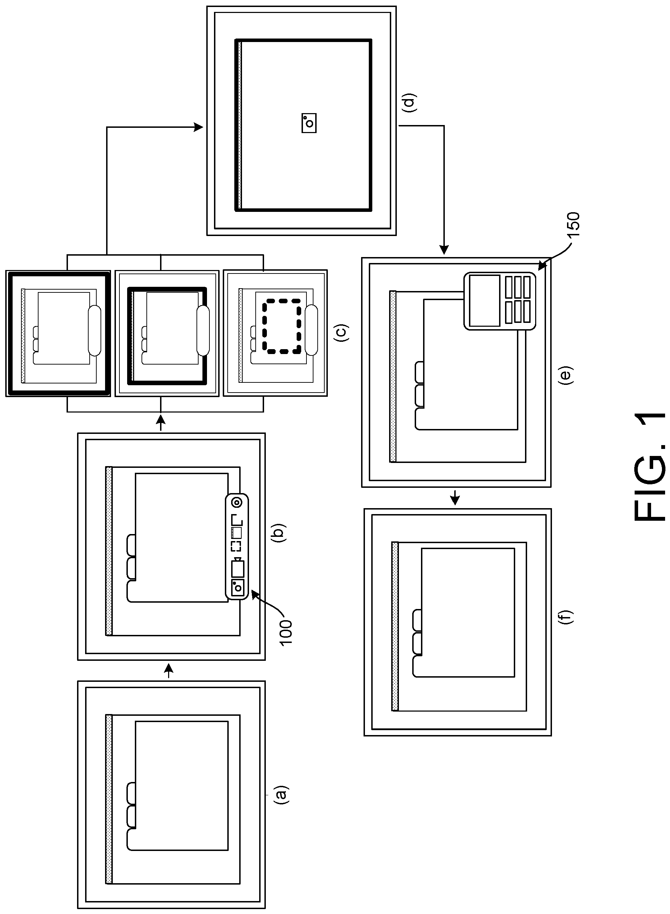

FIG. 1 is a schematic illustration of an example implementation of a screen capture UI 100 and a quick action UI 150, in accordance with implementations described herein. The example schematic illustration shown in FIG. 1(a) includes a window and a number of browser tabs displayed within a full screen of a display. In response to invoking a screen content capture function, a system in accordance with implementations described herein is configured to render and display a screen capture UI 100 as shown in FIG. 1(b) to facilitate user access and use of functionality and features associated with the capture of screen content. The functionality and features accessible via the screen capture UI 100 may be applicable to screen content including still image content, moving image content (i.e., video content), audio content, and the like. The screen capture UI 100 provides for user selection of a screenshot mode (in which selected still image content is captured) or a screen recording mode (in which moving image content with or without audio content is captured). The screen capture UI 100 in this example provides for selection of a full screen capture, a selected window or tab capture, or a custom capture as shown in FIG. 1(c). In some implementations, a custom capture area may provide for the capture of screen content displayed within a single window, multiple windows and/or tabs, a particular application, and the like. Selection of, for example, operation in the screenshot mode for a still image capture of a selected window as shown in FIG. 1(d) captures the screen content included within the boundaries of the selected window. In response to completion of the screenshot capture, the system renders a quick action UI 150 for display. The quick action UI 150 may include, for example, a preview of the captured screen content, and various options for editing, sharing, saving, deleting and the like of the captured screenshot. In response to completion of user activity with the captured screenshot content, the system may cause the display to return screen content to the arrangement prior to the screen capture activity, as in FIG. 1(f).

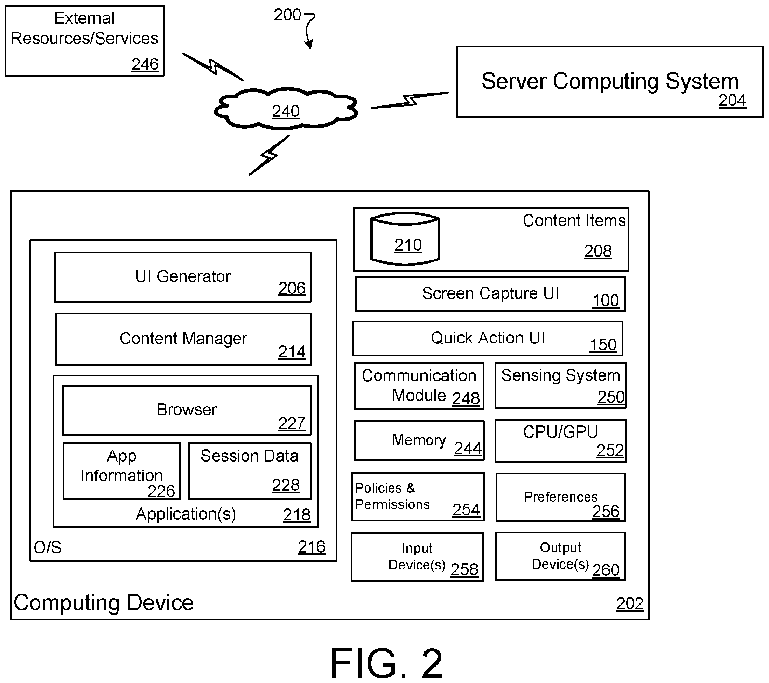

FIG. 2 is a block diagram illustrating an example computing system 200 configured to generate a screen capture UI and a quick action UI, in accordance with implementations described herein. The system 200 may be used to configure computing devices such as, for example, a client computing device 202 and a server computing system 204, and/or other devices (not shown in FIG. 2) to generate the screen capture UI, to capture content in accordance with user input received via the screen capture UI, to generate the quick action UI, and to execute action with respect to the captured screen content in response to user input received via the quick action UI. In some examples, the client computing device 202 can communicate through a communication module 248 via a network 240. In some examples, external resources 246 and/or external services 246 are available to the client computing device 202 and/or the server computing system 204 via the network 240. The external resources may include, for example, online storage, access to content to be consumed by the user via on the computing device 202, data access and the like. In some implementations, the external resources 246 may function to duplicate or replace functionality provided by the server computing system 204.

The example computing device 202 shown in FIG. 2 includes an operating system (O/S) 216. The O/S 216 may execute and/or otherwise manage applications 218. The example computing device 202 includes one or more input devices 258 and one or more output devices 260. The input devices 258 can include, for example, a keyboard, a touch input device, a microphone, a gesture recognition device, an interface for connection to an external device such as a controller or a mouse, and other such input devices. The output devices can include, for example, a display, an audio output device (such as speakers), a physical output device, an interface for connection to external output devices, and other such output devices. In some examples, the computing device 202 includes a sensing system 250 including one or more sensors such as, for example, an image sensor (such as a camera), an audio sensor (such as a microphone), a positional sensor (such as an inertial measurement unit including an accelerometer, a gyroscope, a magnetometer and the like). The O/S 216 may have access to a memory 244, and CPU/GPU 252. The O/S 216 may also include or have access to policies and permissions 254 and preferences 256 associated with the computing device 202.

The O/S 216 may function to execute and/or control applications, UI interactions, accessed services, and/or device communications that are not shown. The applications 218 may be any type of computer program that can be executed/delivered by the computing device 202 (or server computing system 204 or via an external service). Applications 218 may provide a user interface (e.g., application window) to allow a user to interact with the functionalities of a respective application 218. The application window of a particular application 218 may display application data along with any type of controls such as menu(s), icons, widgets, etc. The applications 218 may include or have access to app information 226 and session data 228, both of which may be used to generate content and/or data and provide such content and/or data to the users and/or the O/S 216 via a device interface including one or more output devices 260 of the computing device 202. The app information 226 may correspond with information being executed or otherwise accessed by a particular application 218. For example, the app information 226 may include text, images, audio content, control signals associated with input, output, or interaction with the application 218. In some implementations, the app information 226 may include information from a repository 210 associated with one or more content items 208. In some implementations, the app information 226 may include data associated with a particular application 218 including, but not limited to metadata, table tags, image tags, timestamp data, URL data, and the like. In some implementations, the applications 218 may include a browser 227. The applications 218 can be configured to support capture commands that allow users of the computing device 202 to capture screen content, for example in the form of a screenshot or a screen recording as described above. The applications 218 can be configured to support the editing, sharing, storage and the like of captured screen content.

In some implementations, a UI generator 206 may be operated by the O/S 216. The UI generator may generate the screen capture UI 100 and the quick action UI 150 as described above. In some implementations, a content manager 214 may be operated by the O/S 216 to manage screen capture content, for example, in response to inputs received at one of the input devices 258 related to the screen capture UI 100 and/or the quick action UI 150. In some implementations, the content manager 214 may prepare captured screen content for sharing, editing, storing and the like post-capture.

The computing device 202 may generate and/or distribute particular policies and permissions 254 and preferences 256. The policies and permissions 254 and preferences 256 may be configured by a device manufacturer of computing device 202 and/or by the user accessing device 202. Policies 254 and preferences 256 may include routines (i.e., a set of actions) that trigger based on a particular action or command such as, for example, detection of an event based command, such as the detection of the invoking of the screen capture mode and/or the completion of a screen capture as described above, an audio command, a visual command, a schedule-based command, or other configurable command. Other policies 254 and preferences 256 may be configured to modify and or control content associated with the computing device 202 configured with the policies and permissions 254 and/or preferences 256. In this way, operation in the selected capture mode may be triggered in accordance with policies and permissions 254. In some examples, triggering the operation in the selected capture mode may be in accordance with accessed, predefined, permission data. Optionally, triggering the operation in the selected capture mode in accordance with the permission data comprises triggering the operation of the content manger in the selected capture mode in accordance with the permission data.

The server computing system 204 may include any number of computing devices that take the form of a number of different devices, for example a standard server, a group of such servers, or a rack server system. In some examples, the server computing system 204 may be a single system sharing components such as processors, memory, communication modules and the like.

The network 240 may include the Internet and/or other types of data networks, such as a local area network (LAN), a wide area network (WAN), a cellular network, satellite network, or other types of data networks. The network 240 may also include any number of computing devices (e.g., computer, servers, routers, network switches, etc.) that are configured to receive and/or transmit data within the network 240 and/or external to the network 240. The network 240 may include any number of wired and/or wireless connections.

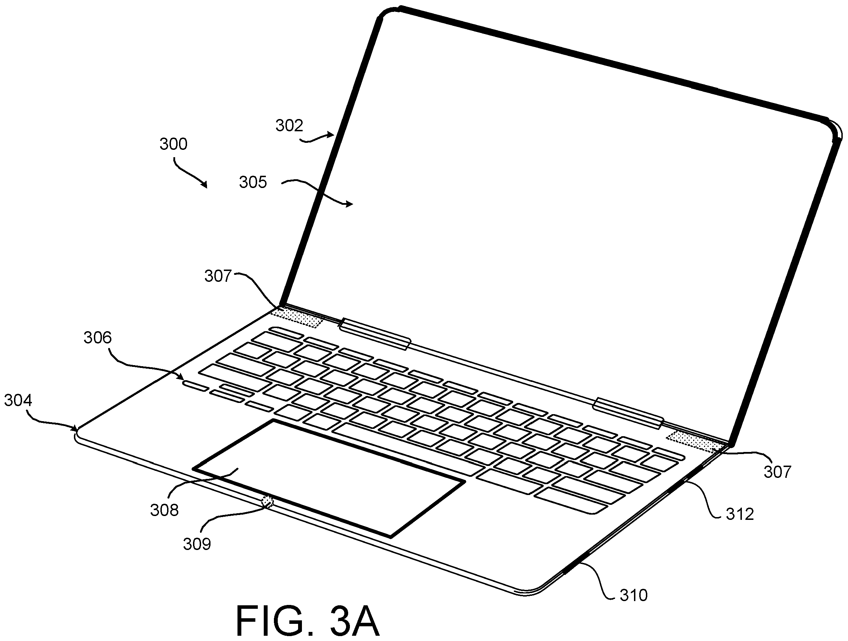

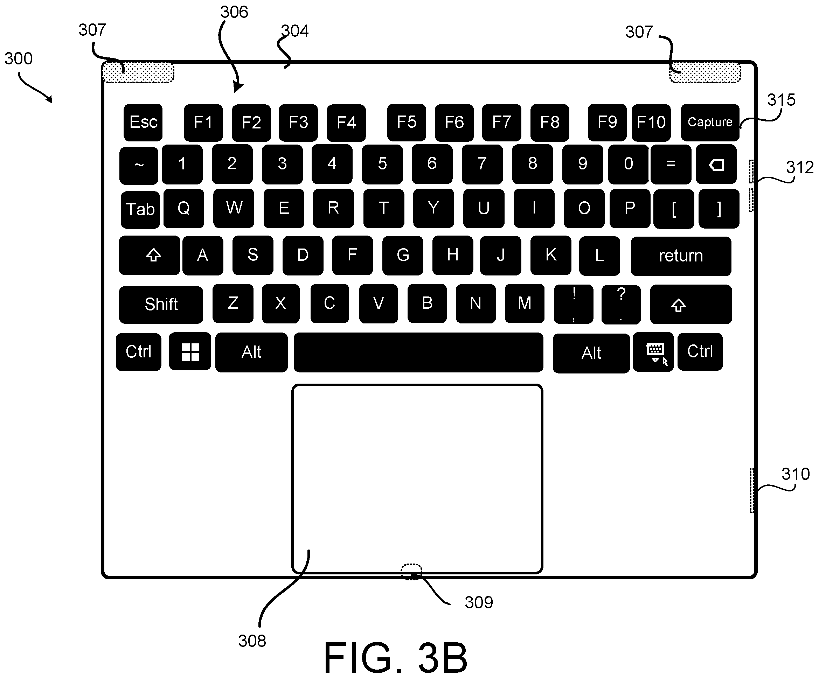

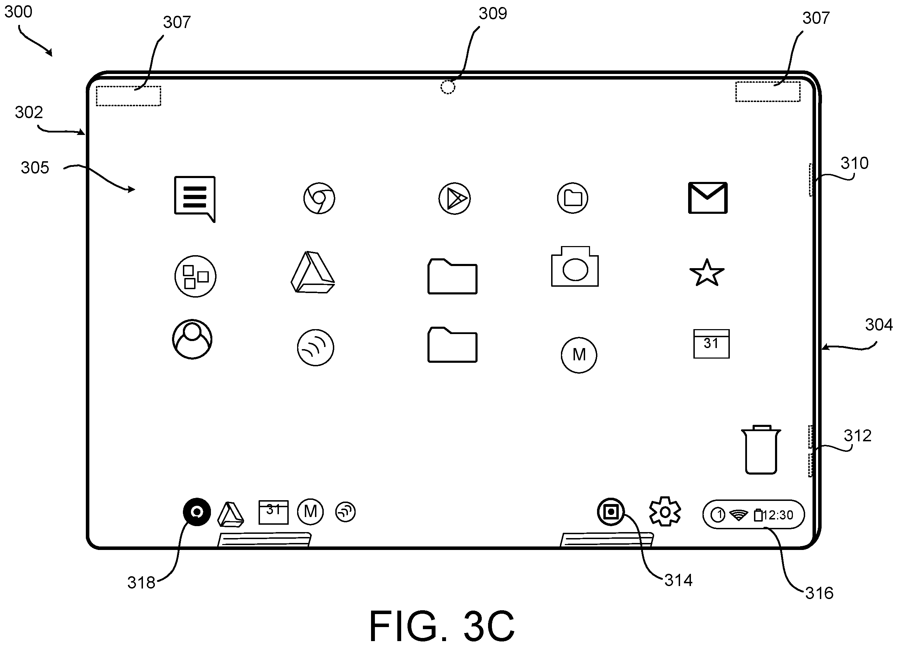

FIG. 3A is a perspective view of an example computing device 300, including the features of the computing device 202 described above with respect to FIG. 2 in a laptop configuration. FIG. 3B is a top view of the base portion 304 of the example computing device 300 shown in FIG. 3A. FIGS. 3C through 3E are front views of the example computing device 300 in a tablet configuration. The example computing device 300 shown in FIGS. 3A-3E is provided simply for purposes of discussion and illustration. The principles to be described herein may be applied to other types of computing devices having screen capture functionality such as, for example, tablet computing devices, handheld computing devices such as smartphones, and other such computing devices having screen capture functionality.

The example computing device 300 includes a display portion 302 coupled to a base portion 304. The display portion 302 includes an output device in the form of a display 305. The base portion 304 includes input devices in the form of an example keyboard 306 and an example touchpad 308. In some implementations, the display 305 can be a touchscreen display device such that the display 305 functions as both an input device and an output device. In the example device 300 shown in FIGS. 3A-3E, one or more audio output devices 307, or speakers 307, and one or more audio input devices 309, or microphones 309 are provided in the base portion 304. In the example device 300 shown in FIGS. 3A-3E, a power control button 310 and one or more volume control buttons 312 are also provided in the base portion 304.

As noted above, discoverability of screen capture functionality in conventional systems can be difficult for a user to discover and access. For example, some systems may rely on a particular combination of keys and/or sequential entry of a combination of keys, defining a keyboard shortcut to invoke screen capture functionality of the device. For example, in the example computing device 300 in the laptop mode shown in FIG. 3A, this could include depression of the <Ctrl> or <Alt> key together with one of the function keys shown in FIG. 3B to invoke screen capture functionality, and/or another combination of keys to invoke a full screen capture mode vs a window capture mode and the like. These different combinations of keys can be easily forgotten, erroneously entered and the like. Similarly, in a tablet computing device or a smartphone, or in the tablet mode of the example computing device 300 as shown in FIGS. 3C through 3E, this could involve pressing and holding multiple buttons such as, for example the power control button 310 together with one of the volume control buttons 312 at the same time. This may be awkward and difficult to accomplish, particularly while holding the device, and may lead to unintentional device shutdown, unintentional volume change and the like. The need to press multiple control buttons simultaneously may pose particular challenges for people with one or more physical disabilities.

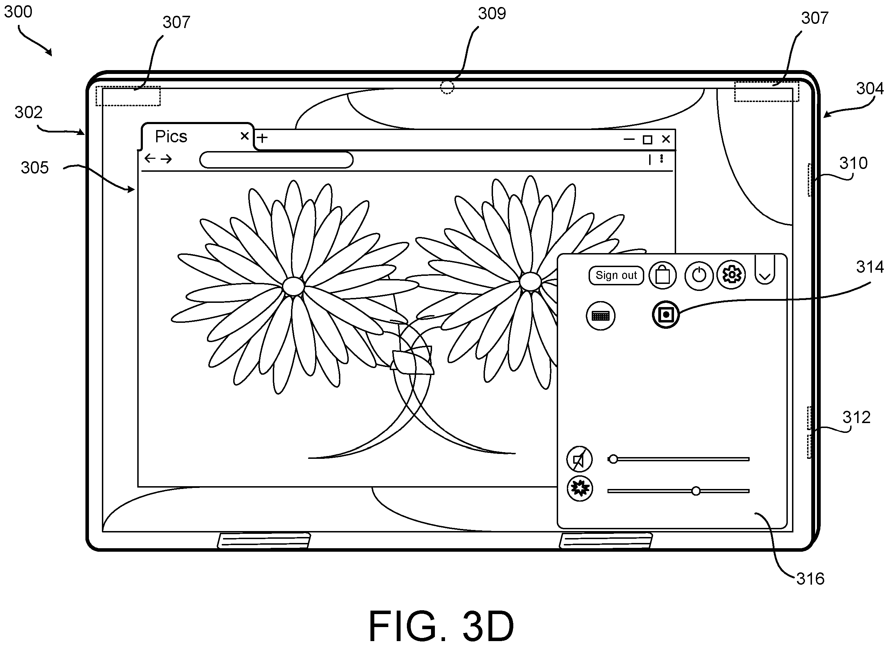

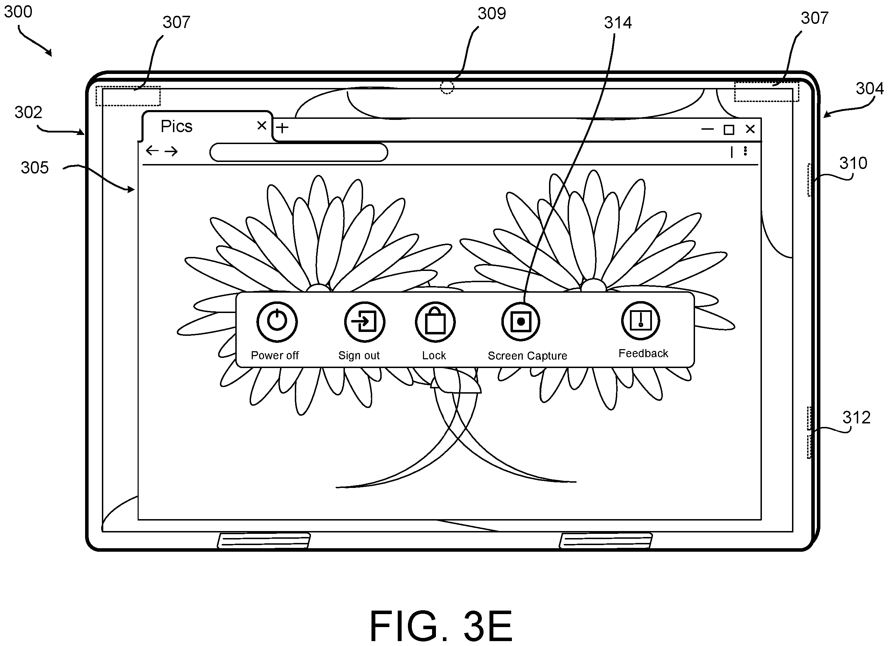

A system and method, in accordance with implementations described herein, provides for improved user discovery and access (or accessibility) to screen capture functionality. In some implementations, this improved user discovery and access includes a dedicated physical key 315 as shown in FIG. 3B that can cause the computing device 300 to invoke screen capture functionality and/or enter the screen capture mode in response to a detected depression of the dedicated physical screen capture key 315 (rather than a combination of multi-purpose keys). In some implementations, this improved user discovery and access includes a persistent screen capture icon 314, or a persistent screen capture UI element 314, as shown in FIG. 3C that can cause the computing device 300 to invoke screen capture functionality and/or enter the screen capture mode in response to a detected selection of the screen capture UI element 314. The location of the screen capture key 315 and/or the persistent screen capture icon 314 shown in FIGS. 3B and 3C are just exemplary. The screen capture key 315 and/or the persistent screen capture icon 314 can be in different locations, can be arranged differently with other elements, can have a different appearance and the like. In some implementations, screen capture functionality can be invoked from expansion of a system menu 316 shown in FIG. 3C that provides for user selection of the screen capture UI element 314 as shown in FIG. 3D. In some implementations, screen capture functionality can be invoked via a launcher search initiated by selection of a launcher search icon 318 as shown in FIG. 3C that can map the user to the screen capture mode of the computing device 300. In some implementations, screen capture functionality can be invoked through a press and hold of the power control button 310. The press and hold of the power control button 310 can trigger display of a power menu that provides for user selection of the screen capture UI element 314 in addition to various power related options, as shown in FIG. 3E. Accessibility to functionality of the device may therefore be improved.

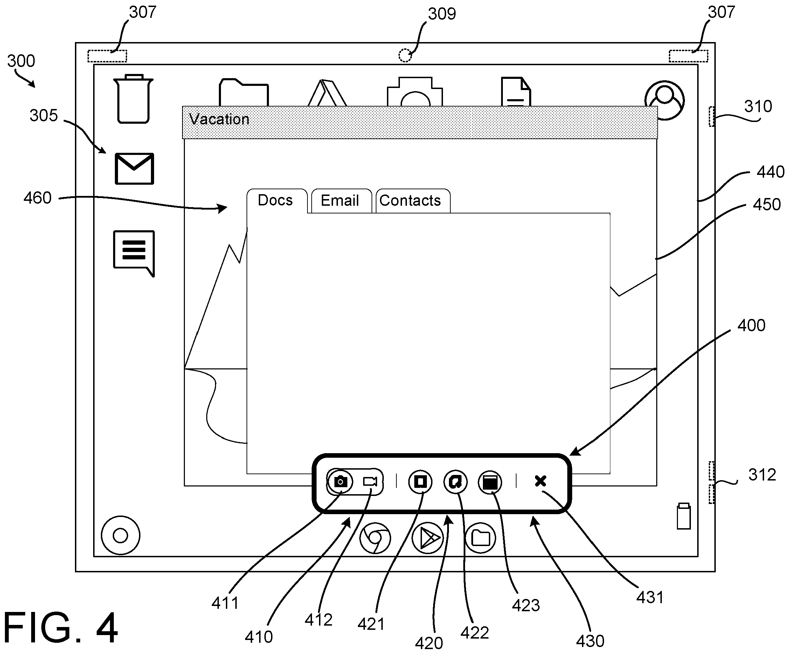

In response to invoking screen capture functionality in the example computing device 300 as described above, an operating system of the example computing device 300, such as the O/S 216 described above, may function to generate a screen capture UI 400, as shown in FIG. 4. For example, the O/S 216 may control the UI generator 206 to generate the screen capture UI 400 in response to an action that invokes screen capture functionality of the computing device, to be displayed by the computing device 300 for user interaction.

FIG. 4 illustrates an example screen capture UI 400 that may be displayed when the computing device 300 is in the screen capture mode and screen capture functionality of the computing device 300 is active. The screen capture UI 400 is displayed on the display 305 of the computing device 300 such that the screen capture UI 400 floats on the display 305, to provide easy access to the screen capture functionality of the computing device 300. In some implementations, the screen capture UI 400 may be moved by the user to, for example, improve visibility of/access to content displayed on the display 305. In some implementations, the screen capture UI 400 may be hidden by the user to improve visibility of/access to content displayed on the display 305. In the example shown in FIG. 4, a plurality of different tabs 460 are displayed on the display 305 of the computing device 300 and are available for selection by the user. An open window 450 displays content that is partially obscured by the plurality of tabs 460. The window 450 and the tabs 460 occupy a portion of a full screen area of the display 305. In the example shown in FIG. 4, the screen capture UI 400 is displayed in response to the user having invoked the screen capture functionality of the computing device 300 as described above.

The example screen capture UI 400 includes a first section 410, a second section 420, a third section 430 and a fourth section 440. In the example shown in FIG. 4, the first section 410 includes selectable items or UI elements or icons that trigger a selected screen capture mode in response to selection of one of the icons or elements. In the example shown in FIG. 4, the second section 420 includes selectable items or icons or UI elements to designate a particular screen capture area in response to selection of one of the icons. In the example shown in FIG. 4, the third section 430 includes selectable items or icons or UI elements that allow for user selection of audio settings during screen capture (and in particular, during screen recording). In the example shown in FIG. 4, the fourth section 440 provides for exit from the screen capture mode and/or closure of the screen capture functionality and/or termination of a screen recording session in response to user selection. The example screen capture UI 400 shown in FIG. 4 is just one example arrangement. In some implementations, the screen capture UI 400 can include more, or fewer sections, arranged differently than shown in FIG. 4. In some implementations, the screen capture UI 400 can include more, or fewer, selectable items or icons or UI elements, grouped differently and/or arranged differently.

The first section 410 of the example screen capture UI 400 includes a first icon 411, or a first UI element 411 providing for selection of a screen capture mode, or a screenshot mode (a first capture mode), in which still image content displayed on the display 305 of the computing device 300 may be captured, and a second icon 412, or a second UI element providing for selection of a screen recording mode (a second capture mode) in which moving image content with or without audio content may be captured. In the screenshot mode, the O/S 216 functions to capture screenshots of still image content displayed on the display 305 of the computing device 300. In the screen recording mode, the O/S 218 functions to capture screen recordings of moving image content, or video content displayed on the display 305 of the computing device 300. In the screen recording mode, the O/S 218 is configured to function to capture screen recordings of video content displayed on the display 305 of the computing device 300, without audio also capturing audio content based on, for example, an audio setting selected by a user. In the screen recording mode, the O/S 216 may also function to capture audio content associated with the video content during the screen recording session. In some implementations, the audio content may be captured during the screen capture recording session by the microphone 309 of the computing device 300. Audio content captured for recording by the microphone 309 may include ambient audio content, or ambient sound, detected within a detection range of the microphone 309 and/or a proximity of the computing device 300. This may include, for example audio content output by the speakers 307 of the computing device 300 and detected by the microphone 390, vocal output detected by the microphone 309, and other ambient sound detectable within the detection range of the microphone 309. In some implementations, the O/S 216 may function to capture audio content embedded or inherent in the video content being captured during the screen recording session (audio content associated with the moving image content), with the microphone 309 in a standby mode. In some implementations, the O/S 216 may function to capture both audio content that is embedded or inherent in the video content and ambient audio content detected by the microphone 309.

The second section 420 of the example screen capture UI 400 includes first, second and third icons 421, 422, 423, or first, second and third UI elements 421, 422, 423 providing for selection of a screen capture area, the screen capture area including at least a portion of the content being displayed. The first UI element 421 provides for selection of a full screen capture area. The second UI element 422 provides for selection of a custom screen capture area. The third UI element 423 provides for selection of a window or tab capture area. By selecting a custom screen capture area or a window or tab capture area, a user can select a portion of the content being displayed by computing device 300 to capture.

The third section 430 of the example screen capture UI 400 includes an icon 431 or UI element 431 providing for user selection of audio settings associated with the capture of screen content, particularly in a screen recording mode. For example, selection of the UI element 431 may enable recording of audio content during screen recording (for example, audio content detected by the microphone of the computing device 300 and/or audio content embedded in or inherent in the video content). The fourth section 440 of the example screen capture UI 400 includes an icon 441 or UI element 441 that is selectable for termination of a screen recording session, and for exiting the screen capture mode, for example upon completion of the capture of screen content and/or the end of a screen capture session.

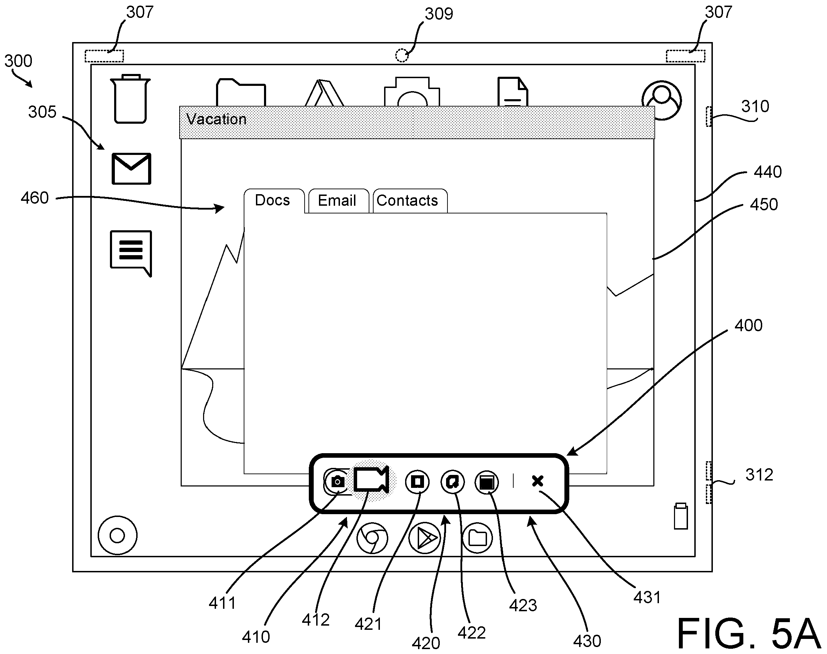

FIGS. 5A-5G illustrate an example screen recording session, in accordance with implementations described herein. The features to be described with respect to FIGS. 5A-5G may in most circumstances be similarly applied to an example in which the screen capture mode, or screenshot mode, is selected for the capture of still image content displayed on the display 305 of the computing device 300.

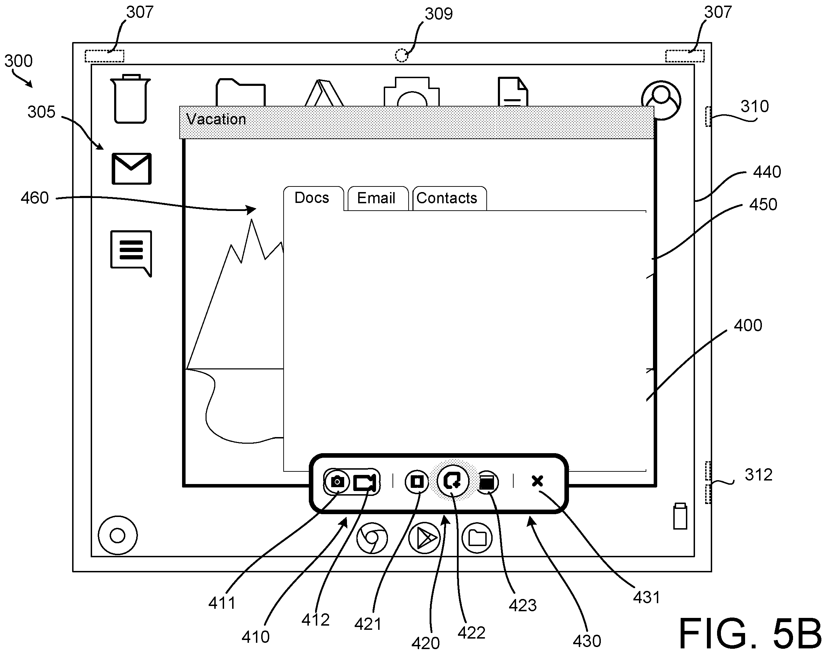

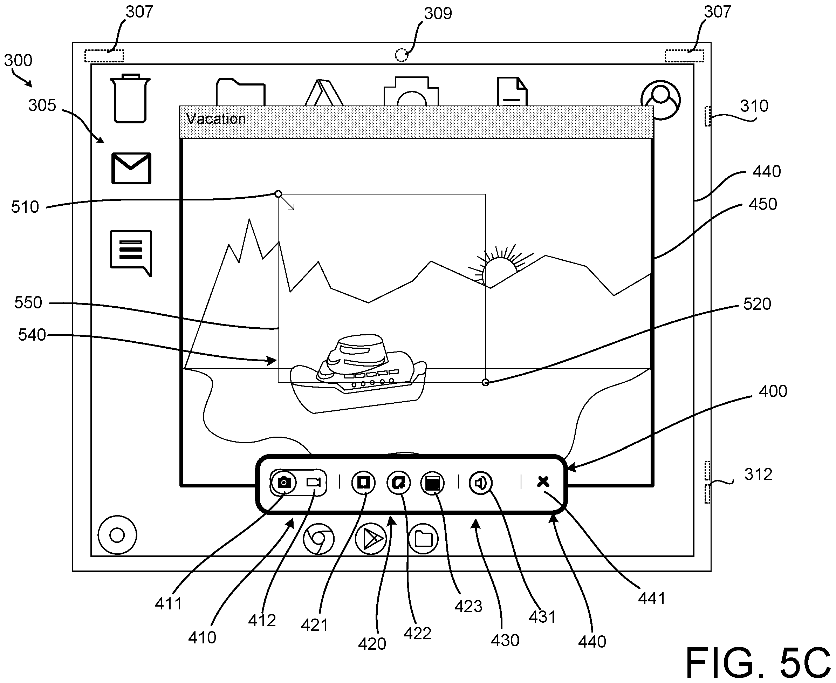

In particular, FIG. 5A illustrates selection of the screen recording mode (the second capture mode) in response to detected selection of the second UI element 412 (or the screen recording UI element 412) in the first section 410 of the screen capture UI 400. The screen capture of moving image content may be triggered in response to selection of the second UI element 412. In other words, selection of the second capture mode triggers operation in the second capture mode, or screen recording mode. In FIG. 5B, the second UI element 423 is selected, for selecting a custom screen capture area for the screen recording of image content displayed on the display 305. In some implementations, the screen capture area 540 may be designated in response gesture inputs detected by a touch sensitive element of the display 305. This may include, for example, a tap input, or a series of tap inputs, to indicate boundaries of the desired screen capture area 540. In some implementations, the gesture inputs may include touch and drag type of inputs detected by the touch sensitive element of the display 305. In some implementations, to designate a specific screen capture area 540 within the content displayed on the display 305, the user may click or touch in the area of the display 305 to be captured, and then drag, for example, from a first point 510, or an initial point 510, to a second point 520, or a terminal point 520, to set the desired screen capture area 540, as shown in FIG. 5C. A release of the touch or click at the second point 520 may set a boundary 550 of the screen capture area 540. Thus, in this example, the custom screen capture area 540 may be defined by, for example, a trajectory and a distance between the first point 510 and the second point 520. In this example, a custom screen capture area 540 is selected by the user. In some implementations, the full screen UI element 421 may be selected to enable screen recording of the full screen 440 of the display 305, or the window/tab UI element 423 may be selected to enable screen recording of a selected window or tab.

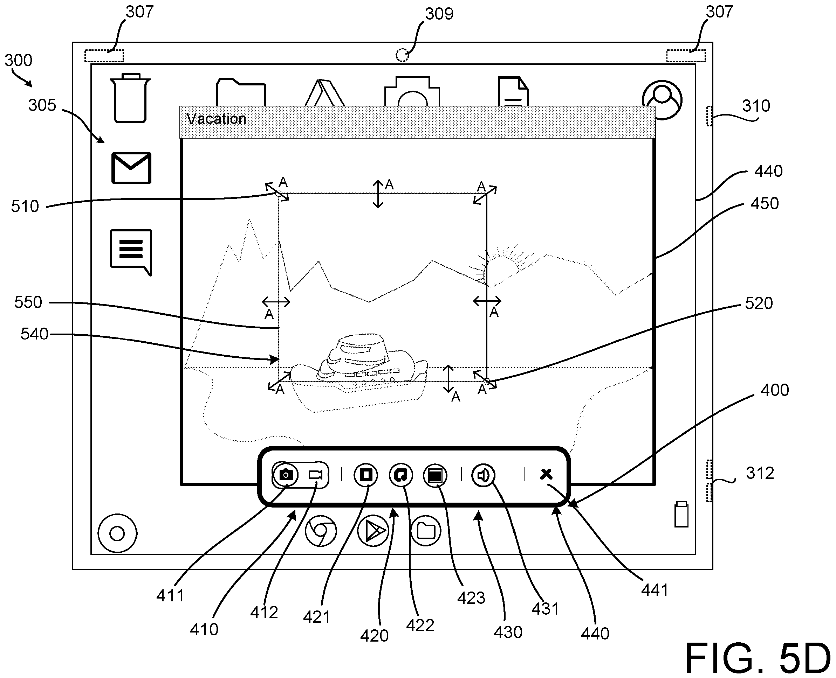

In some implementations, the O/S 216 functions to determine and display dimensions of the dragged screen capture area 540 while the dragging is implemented. In some implementations, the dimension of the dragged screen capture area 540 is displayed as a pixel area. In some implementations, the O/S may function to display the dimension of the dragged screen capture area 540 in response to a detected hover over a particular portion of the screen capture area 540 such as, for example a corner of the screen capture area 540. This may allow the user to designate an accurately sized screen capture area 540. In some implementations, the O/S 216 functions to highlight the selected screen capture area 540, and/or to adjust or diminish luminance of unselected areas of the display 305 as shown in FIG. 5D, to accentuate or highlight the selected screen capture area 540. In some implementations, the O/S 216 functions to hide the screen capture UI 400 and/or adjust a display position of the screen capture UI 400 while the screen capture area 540 is set in this manner, so that the screen capture UI 400 does not obscure the screen capture area 540. In some implementations, the O/S 216 may function to auto-hide the screen capture UI 400 as the screen capture area 540 is selected and adjusted. In some implementations, the O/S 216 may hide the screen capture UI 400 in response to a user selection or set user preference. In some implementations, the screen capture UI 400 may be draggable to different display positions on the display 305, so that the screen capture UI 400 is available to the user, but does not obscure the screen capture area 540.

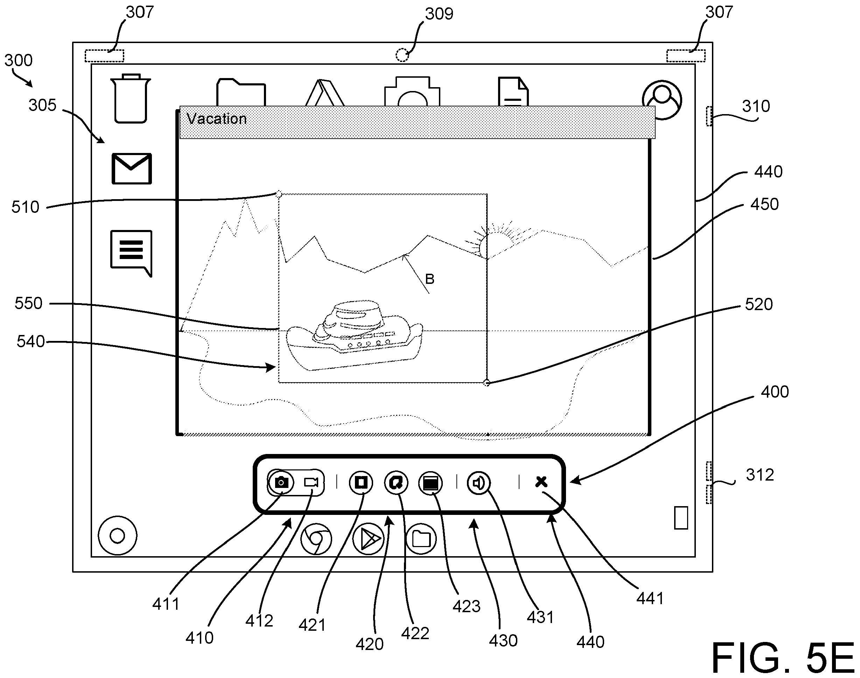

In some implementations, after the screen capture area 540 is selected in the manner described above, the boundaries 550 of the screen capture area 540 may be adjusted by dragging on corners of the screen capture area 540 and/or edges of the screen capture area 540, as illustrated by the arrows shown in FIG. 5D. In some implementations, the user may adjust the screen content that is captured within the boundaries 550 of the screen capture area 540 by clicking within the screen capture area 540 and dragging the displayed content, as shown by the arrow B in FIG. 5E.

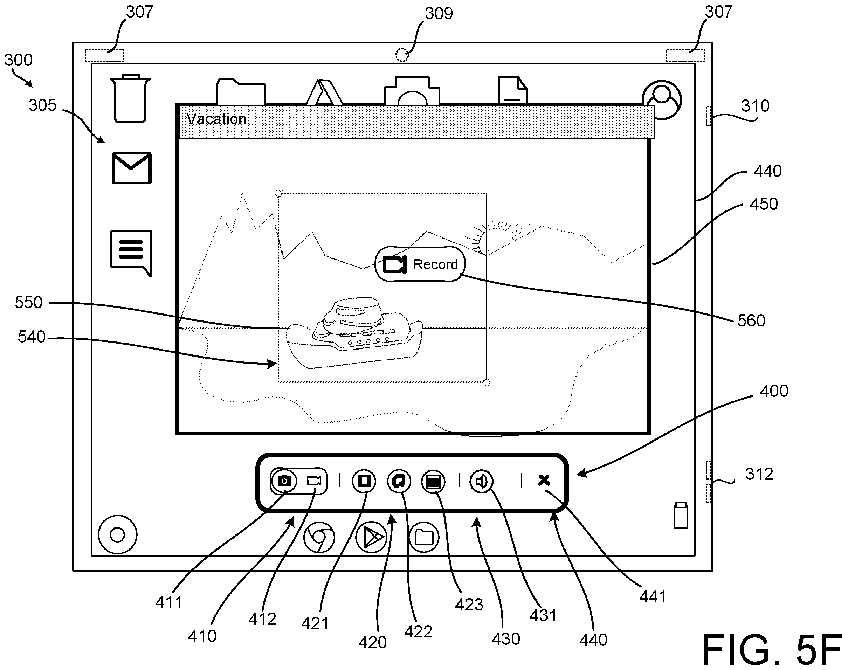

Once the screen capture area 540 is finalized, the O/S 216 may function to present a capture UI element 560, as shown in FIG. 5F. In this example, in which the screen recording mode has been selected, selection of the capture UI element 560 may initiate a screen recording session in which image content displayed within the boundaries 550 of the screen capture area 540 is recorded. As described above, in some implementations, audio content may also be recorded during the screen recording session. In other words, triggering screen recording of video content includes recording at least a portion of the moving image content output by the display and optionally recording audio content associated with the video content (audio content associated with the moving image content output by the display and/or audio content detected by the microphone, i.e. both types of audio content may be captured at the same time in some implementations). In some implementations, the O/S 216 may function to generate and display a countdown timer, to provide a visual indication to the user of an amount of time remaining until initiation of the screen recording. This may allow the user to further refine the screen capture area 540 and the like prior to the start of screen recording. Similarly, the O/S 216 may function to generate and display a run timer, to provide a visual indication to the user of an amount of elapsed recording time.

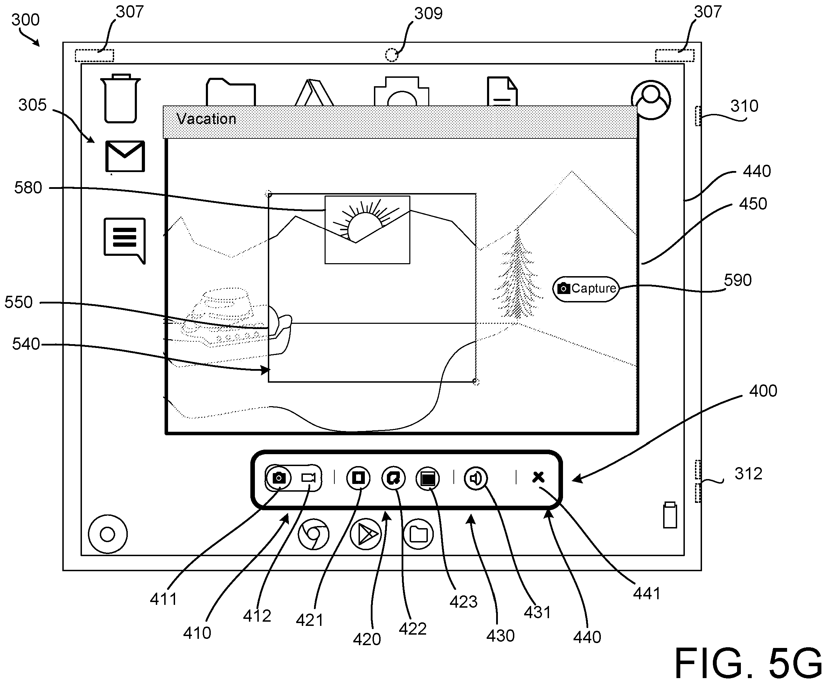

In some situations, the user may wish to capture a screenshot during a screen recording session. In the example shown in FIG. 5G, a screenshot may be captured during a screen recording session by, for example, selecting the first UI element 411 in the first section 410 of the screen capture UI 400 to enable the screenshot mode (the first capture mode), and designating a screen capture area 580 for the screenshot. The screen capture of content within the screen capture area 580 may be executed in response to selection of the capture UI element 590. In other words, selection of the first capture mode triggers operation in the first capture mode, or screenshot mode.

In some situations, a user may wish to move content into and out of the screen capture area 540 as the screen recording is in progress. As the O/S 216 functions to record whatever is displayed within the boundaries 550 of the screen capture area 540, the movement of content into the screen capture area 540 (for example, dragged into the screen capture area 540 by the user) will be captured in the screen recording as long as the dragged content remains within the screen capture area 540. Content dragged into the screen capture area 540 for screen recording may include still image content, moving image content, windows, tabs, and other such content. Similarly, content removed from the screen capture area will no longer be included in the screen recording. Additionally, cursor movement, mouse movement, and other such movement of items within the screen capture area 540, alteration of items within the screen capture area 540 and the like will be included in the screen recording.

The user may end the screen recording session by, for example, selecting the UI element 441 in in the screen capture UI 400.

The screen capture UI 400 may allow the user to select and capture screen content in fewer steps, and with fewer user inputs, thus reducing power consumption and computational load. Even so, in some situations, recording of screen content as described above can be computationally intensive and memory intensive depending on, for example, a length of the screen recording, image quality, accompanying audio content and the like. In some implementations, in an effort to manage system level resources, an upper limit may be set for video frame cache, so that issues with memory overwrite are not encountered. In a system and method, in accordance with implementations described herein, screen recording logic is contained within its own independent process outside of the main O/S 216 and associated operating system user interface, browser rendering and the like, for example within the GPU 252. Triggering operation in a second capture mode can thus comprise accessing a GPU of the computing device and recording one or more frames of the moving image content from the GPU. Isolation of the screen recording functionality from the main operating system utility may provide a more secure capture process than conventional systems, and may allow for a relatively high performance, memory efficient approach to recording video screen content.

The example screen content capture described above with respect to FIGS. 5A-5G is described with respect to the capture of a screen recording, in which content, for example, moving image content captured within the designated screen capture area is recorded, alone or together with audio content. However, the principles described above can also be applied to the capture of screen content in the screenshot mode, in which still image content within the designated screen content area is captured.

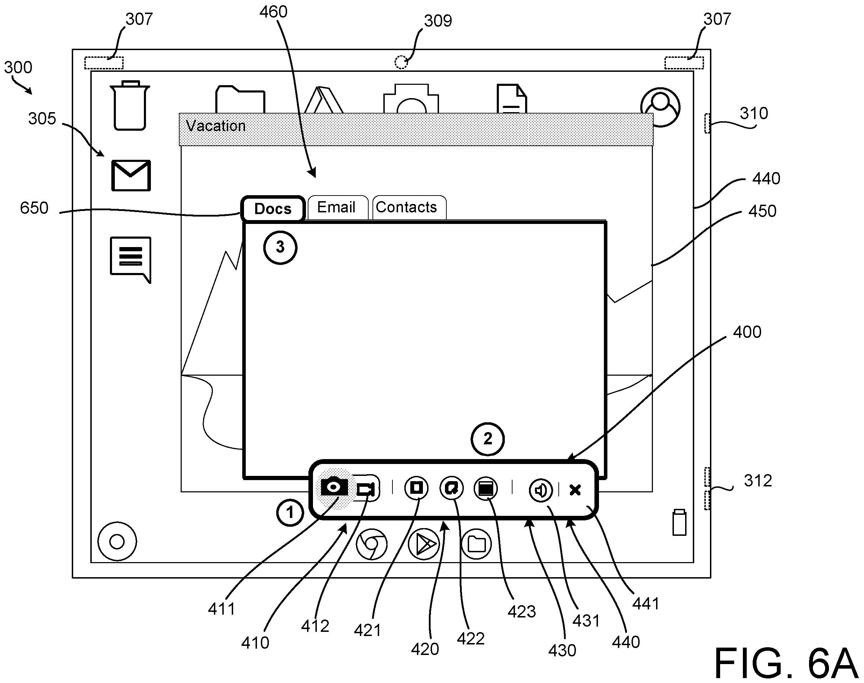

As discussed above, the principles described above with respect to the example capture of screen content in the screen recording mode shown in FIGS. 5A-5G may in general also be applied to the capture of screen content when operating in the screenshot mode (the first capture mode). FIGS. 6A-6C illustrate the example capture of screen content in the screenshot mode, in accordance with implementations described herein.

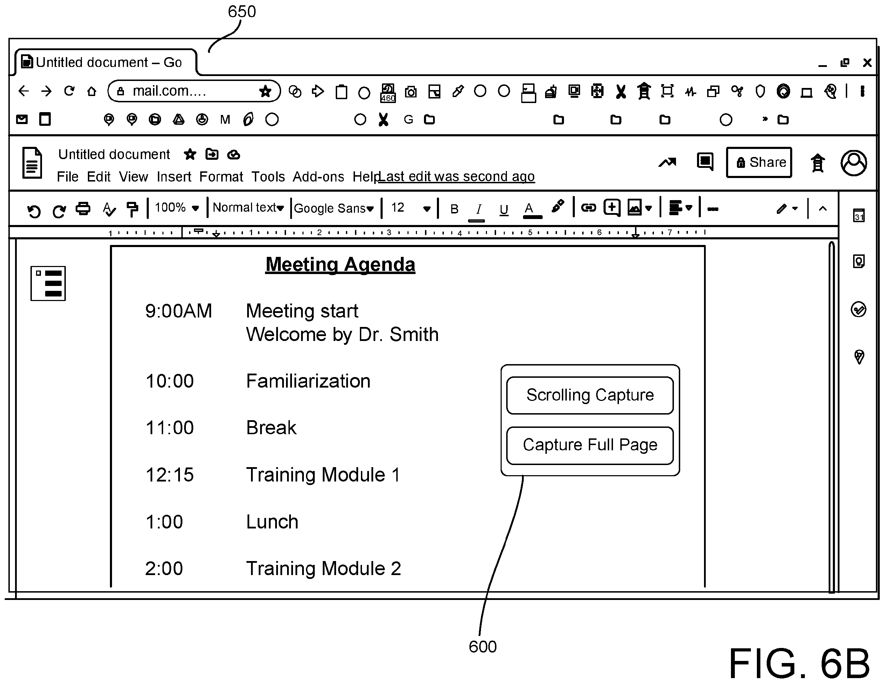

In this example, the first UI element 411 in the first section 410 of the screen capture UI 400 is selected at (1) to invoke operation in the screenshot mode, and the third UI element 423 in the second section 420 of the screen capture UI 400 is selected at (2) to select the Documents tab 650 from the plurality of tabs 460 displayed on the display 305 at (3). In response to the selection of the Documents tab 650 at (3) in FIG. 6A, the O/S 216 functions to enable capture of a screenshot of the (still image) content in the Documents tab 650, as shown in FIG. 6B. In this example, only a portion of the Agenda document is visible in the screen capture area displayed in connection with the Documents tab 650. In this situation, a user may wish to capture a screenshot of all of the content contained in the window or tab, or the entire document, even though not all of the content is visible on the display 305. In some implementations, the O/S 216 may function to generate and display a full capture UI 600 in response to, for example, a cursor hover over the capture area defined by the window/tab/document, touching/holding in the capture area defined by the window/tab/document and the like.

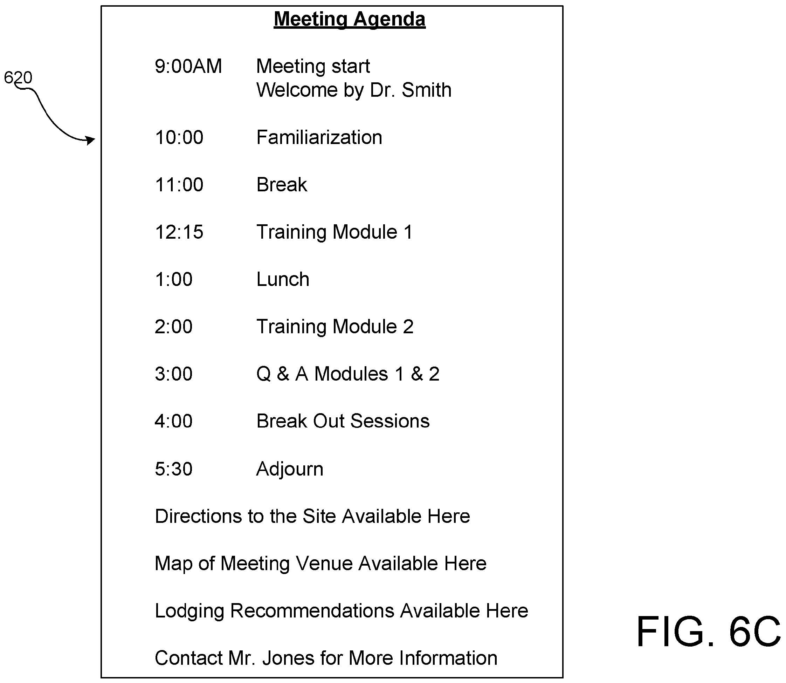

In some implementations, the full capture UI 600 may allow the user to choose to capture long form content manually by selecting scrolling capture mode. The scrolling capture mode may allow the user to capture a scrolling screenshot that allows the user to scroll through a document and mark a portion of the document corresponding to an end of the content desired for capture in the screenshot. In some implementations, the full capture UI 600 may allow the user to capture long form content automatically by selecting a capture full page mode, in which the system marks all of the content of the identified document for capture in the screenshot. In the example shown in FIG. 6B, only a portion of the content is visible within the confines of the tab selected for capture. However, selection of the scrolling capture mode or the full page capture mode in this circumstance may yield a screenshot 620 including the full content of the document and/or page and/or including content not visible on the screen at the time of initial selection of the window/tab, as shown in FIG. 6C.

As noted above, captured screen content (including screen recordings and screenshots) are often intended for use shortly after capture, or immediately after capture. Management of captured screen content, including improved and ready access to captured screen content post capture may enhance the user experience and may improve system resource management. That is, system level resource management associated with the capture of screen content and the use and disposition of the captured screen content post-capture may improve computational efficiency of the computing device 300. Accessibility to functionality of the computing device 300 may also be improved

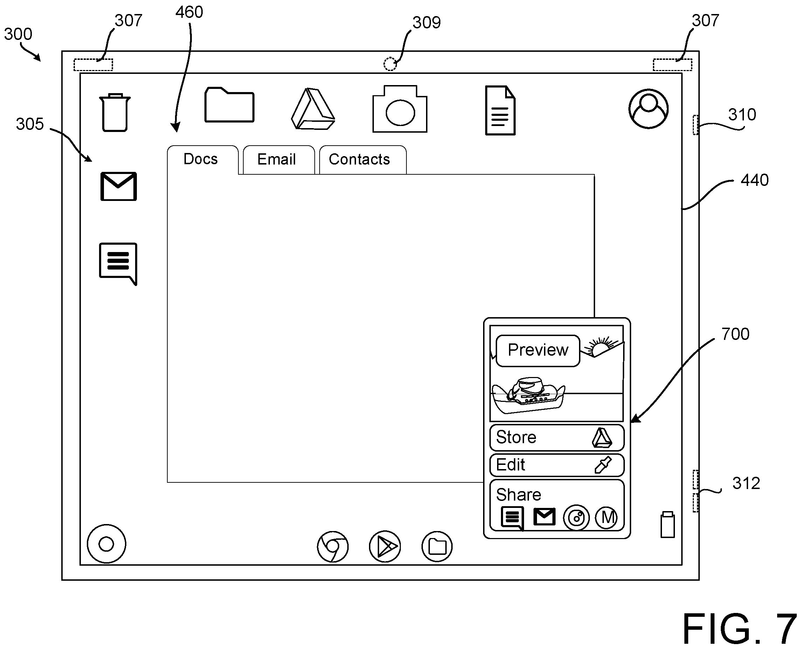

For example, in some implementations, the O/S 216 may function to automatically save captured content to a designated location. For example, a captured screenshot may be automatically saved to a clipboard utility for ready user access. A captured screen recording may be automatically saved to a designated storage utility depending on, for example, file size, system capabilities, user preferences, and the like. In some implementations, the O/S 216 may function to generate and display a quick action UI 700 in response to completion of the capture of screen content (a screenshot or a screen recording), as shown in FIG. 7. In some implementations, the quick action UI 700 may provide a thumbnail or link to a preview of the captured screen content. In some implementations, the quick action UI 700 may include a link for storing the captured screen content. In some implementations, the quick action UI 700 may include a link for editing the captured screen content. In some implementations, the quick action UI 700 may include various options for sharing the captured content. In some implementations, the quick action UI 700 may provide for deleting the captured content. The quick action UI 700 may allow the user to take follow on action with the captured screen content in fewer steps, and with fewer user inputs, thus reducing power consumption and computational load. Moreover, this approach can help overcome one or more limitations of a small display size (e.g. on mobile computing devices) by minimizing the need to switch between windows and applications. Accessibility may therefore be improved, particularly for uses with one or more physical disabilities.

In some implementations, multiple content capture areas may be designated by the user. In some implementations, the designation of multiple content capture areas may provide for the substantially simultaneous and/or continuous capture of screen content. In some implementations, two or more moving image capture areas may be designated for capture of screen content, and/or two or more still image capture areas may be designated for capture of screen content, and/or two or more capture areas may be designated for capture of a combination of still images and moving images. In some implementations, one or more still image capture area(s) may be designated within one or more moving image capture area(s). In some implementations, one or more still image capture area(s) may be designated outside of one or more moving image capture area(s). In some implementations, screen content captured from multiple content capture areas in this manner may be saved separately, for viewing separately. In some implementations, screen content captured from multiple content capture areas in this manner may be saved in combination with each other, or in association with each other so that still and/or moving images may be stitched together and displayed and/or replayed in sequence or in parallel.

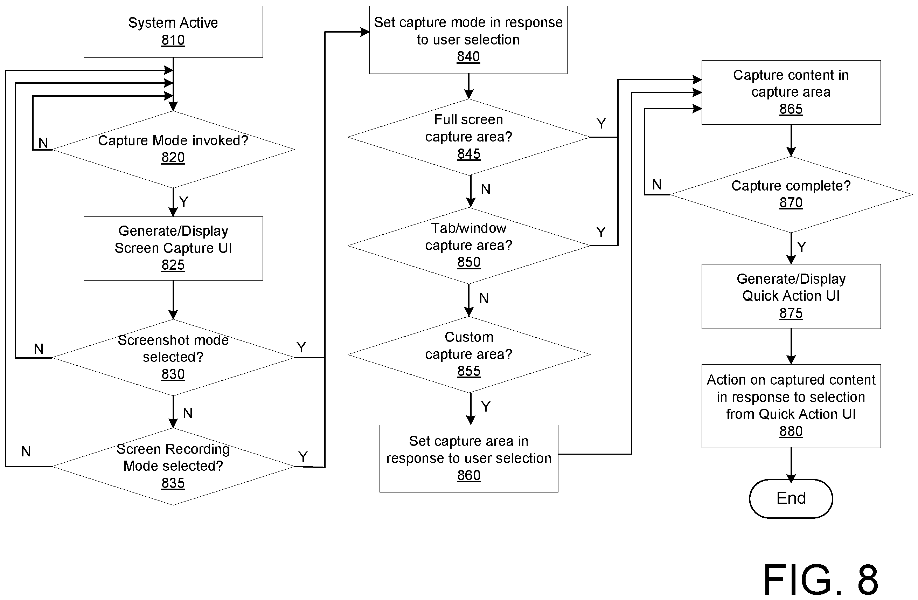

FIG. 8 is a flowchart of an example method 800 of capturing screen content, in accordance with implementations described herein. The example method 800 may be performed by a computing device, such as the example computing device 300 described above, that is capable of capturing screen content, including the screen capture still image screen content and moving image screen content (or video content) with or without audio content.

With the computing device 300 in an active state (block 810), the screen capture functionality of the device 300 may be invoked. The screen capture functionality of the computing device 300 may be invoked by one of the example methods described above with respect to FIGS. 3B through 3E. That is, in some implementations, the screen capture functionality of the computing device 300 may be invoked through user interaction with a dedicated key 315 of a keyboard (a physical keyboard or a virtual keyboard) of the computing device 300 and/or a persistent screen capture UI element 314 displayed by the computing device 300. In some implementations, the screen capture functionality of the computing device 300 may be discoverable through a system menu 316 and/or through a launcher search 318 implemented by the computing device 300. In some implementations, the screen capture functionality of the computing device 300 may be discoverable through a press and hold of a designated key or button such as, for example, the power control button 310. In some implementations, the screen capture functionality of the computing device 300 may be discoverable and launched by other methods.

In response to detection by the O/S 216 that the screen capture functionality of the computing device 300 has been invoked (block 820), the O/S 216 generates a screen capture UI, such as the example screen capture UI 400 shown in FIG. 4, for display by the computing device (block 825). A selection of a screen capture mode is then detected. The O/S 216 operates the computing device 300 in screenshot mode (first capture mode) in response to detection of selection of the screenshot mode, for example, via detected selection of a screenshot UI element of the screen capture UI (blocks 830, 840), or operates the computing device 300 in screen recording mode (second capture mode) in response to detected selection of a screen recording UI element of the screen capture UI (blocks 835, 840). The first capture mode is a screenshot mode for capture of still image content output by a display of a computing device, and the second capture mode is a screen recording mode for capture of moving image content output by the display.

Once the screen capture mode has been set, based on user selection (block 840), a screen capture area may be set. The O/S 216 operates the computing device 300 to capture screen content included in a full screen capture area in response to detection of selection of full screen capture, for example via a detected selection of a full screen capture UI element of the screen capture UI (blocks 845, 860), or operates the computing device 300 to capture screen content included in a selected tab or window in response to detection of selection of tab/window capture, for example via detected selection of a tab/window UI element of the screen capture UI (blocks 850, 860), or operates the computing device to capture screen content included in a custom capture area in response to detection of selection of custom capture, for example via detected selection of a custom capture UI element of the screen capture UI (blocks 855, 860). The custom capture area may be set, for example, as described above with respect to FIGS. 5C-5G.

Once the screen capture mode and the screen capture area are set (blocks 840, 860), the O/S 216 operates the computing device 300 to record (or capture) screen content based on the set screen capture mode and the set screen capture area (block 865). In response to detected completion of the screen capture (block 870), the O/S 216 generates a quick action UI, such as the example quick action UI 650 shown in FIG. 7, for display by the computing device 300 (block 875). The O/S 216 functions to control the computing device 300 to take further action on the captured screen content in response to one or more inputs received via the quick action UI (block 880). In some implementations, the further action can include, for example, previewing, editing, saving, sharing, deleting and the like of the captured screen content.

In a system and method, in accordance with implementations described herein, an operating system can be configured to provide access to screen capture functionality of a computing device via a system menu, a dedicated physical key or virtual user interface element, from a launcher search, and the like. In a smaller form factor device (such as a smartphone or a tablet), the operating system can be configured to provide access to the screen capture functionality in response to a press and hold on the power key of the computing device. The operating system can be configured to activate a screen capture mode and generate a screen capture user interface allowing the user to select a screenshot mode or a screen recording mode; to select a custom portion of the screen, or a particular window, or the full screen for capture; and to exit the screen capture mode. In response to selection of a custom portion of the screen for capture, the operating system is configured to provide the ability to select and edit/alter a portion of the screen to be captured, and to move content into/out of the portion of the screen that is designated for capture, and to allow for full page capture and/or scrolling during capture to provide for capture of content not currently visible on the screen. The operating system is configured to provide for screen recording of video content (including audio content) in addition to screenshotting of still image content, and to provide for screenshotting within the screen recording function. The operating system can provide access to screen capture content on a share sheet or a quick action user interface, including captured screen content and share, copy, edit and delete options. Performing screen recording by accessing a graphics processing unit of the computing device can provide a high performance, memory efficient, approach to capturing video content that is isolated within the operating system so as to be more secure than conventional content capture systems.

The systems and methods described herein may be widely adapted to a variety of user computing devices including small devices such as mobile devices, as well as larger devices including tablets, laptops, desktops and the like. For such devices, the operating system and user interfaces described herein may provide an advantage of making screen capture functionality easily discoverable and accessible, thus avoiding the need to establish/use shortcuts to invoke the screen capture functionality of the device. Fewer user inputs may be needed to access the screen capture functionality, which can reduce power consumption of the device. The operating system and user interfaces described herein make screen recording available on user devices, which is unavailable on conventional systems. The operating system and user interfaces described herein provide for selection of a screen area for capture, and expand pre- and post-capture editing, thus expanding functionality of the user devices. The operating system and user interfaces described herein provide for management of screen capture content and facilitate the storage and sharing of screen capture content, thereby shortening the number of steps required by conventional systems and avoiding time consuming management of the screen capture content.

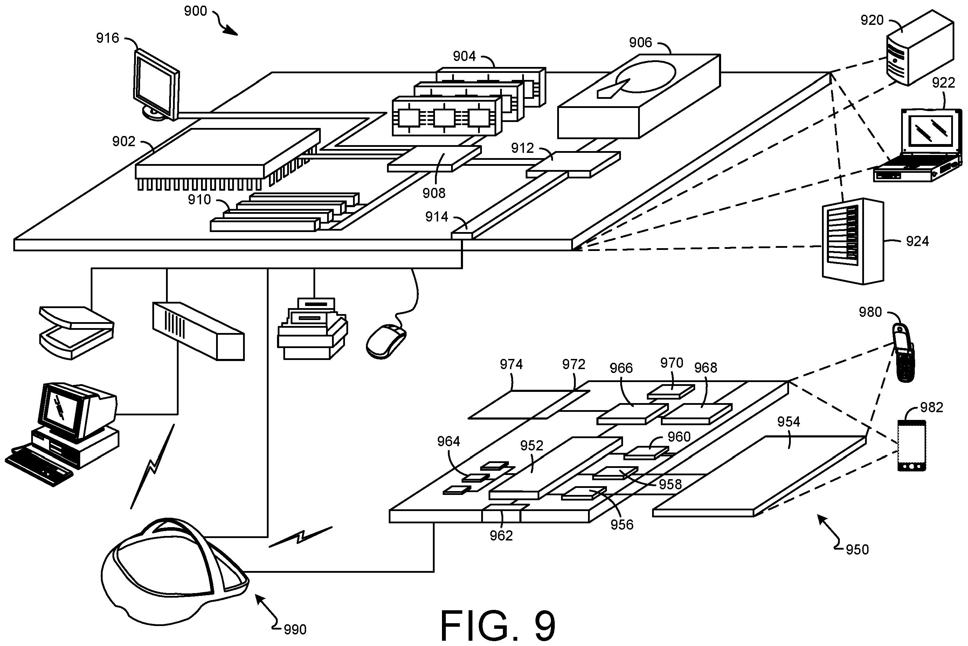

FIG. 9 shows an example of a computer device 900 and a mobile computer device 950, which may be used with the techniques described here. Computing device 900 is intended to represent various forms of digital computers, such as laptops, desktops, tablets, workstations, personal digital assistants, smart devices, appliances, electronic sensor-based devices, televisions, servers, blade servers, mainframes, and other appropriate computing devices. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. The processor 902 can be a semiconductor-based processor. The memory 904 can be a semiconductor-based memory. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk. In general, the computer-readable medium may be a non-transitory computer-readable medium.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods and/or computer-implemented methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 974 may also be provided and connected to device 950 through expansion interface 972, which may include, for example, a SIMM (Single In Line Memory Module) card interface. Such expansion memory 974 may provide extra storage space for device 950, or may also store applications or other information for device 950. Specifically, expansion memory 974 may include instructions to carry out or supplement the processes described above, and may include secure information also. Thus, for example, expansion memory 974 may be provide as a security module for device 950, and may be programmed with instructions that permit secure use of device 950. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 974, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radiofrequency transceiver 968. In addition, short-range communication may occur, such as using a Bluetooth, Wi-Fi, or other such transceiver (not shown). In addition, GPS (Global Positioning System) receiver module 970 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as modules, programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor, or LED (light emitting diode)) for displaying information to the user and a keyboard and a pointing device (e.g., a mouse or a trackball) by which the user can provide input to the computer. Other kinds of devices can be used to provide for interaction with a user as well. For example, feedback provided to the user can be any form of sensory feedback (e.g., visual feedback, auditory feedback, or tactile feedback), and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some embodiments, the computing devices depicted in FIG. 9 can include sensors that interface with a virtual reality or headset (VR headset/AR headset/HMD device 990). For example, one or more sensors included on computing device 950 or other computing device depicted in FIG. 9, can provide input to AR/VR headset 990 or in general, provide input to an AR/VR space. The sensors can include, but are not limited to, a touchscreen, accelerometers, gyroscopes, pressure sensors, biometric sensors, temperature sensors, humidity sensors, and ambient light sensors. Computing device 950 can use the sensors to determine an absolute position and/or a detected rotation of the computing device in the AR/VR space that can then be used as input to the AR/VR space. For example, computing device 950 may be incorporated into the AR/VR space as a virtual object, such as a controller, a laser pointer, a keyboard, a weapon, etc. Positioning of the computing device/virtual object by the user when incorporated into the AR/VR space can allow the user to position the computing device to view the virtual object in certain manners in the AR/VR space.

In some embodiments, one or more input devices included on, or connect to, the computing device 950 can be used as input to the AR/VR space. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 950 when the computing device is incorporated into the AR/VR space can cause a particular action to occur in the AR/VR space.

In some embodiments, one or more output devices included on the computing device 950 can provide output and/or feedback to a user of the AR/VR headset 990 in the AR/VR space. The output and feedback can be visual, tactical, or audio. The output and/or feedback can include, but is not limited to, rendering the AR/VR space or the virtual environment, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some embodiments, computing device 950 can be placed within AR/VR headset 990 to create an AR/VR system. AR/VR headset 990 can include one or more positioning elements that allow for the placement of computing device 950, such as smart phone 982, in the appropriate position within AR/VR headset 990. In such embodiments, the display of smart phone 982 can render stereoscopic images representing the AR/VR space or virtual environment.

In some embodiments, the computing device 950 may appear as another object in a computer-generated, 3D environment. Interactions by the user with the computing device 950 (e.g., rotating, shaking, touching a touchscreen, swiping a finger across a touch screen) can be interpreted as interactions with the object in the AR/VR space. As just one example, computing device can be a laser pointer. In such an example, computing device 950 appears as a virtual laser pointer in the computer-generated, 3D environment. As the user manipulates computing device 950, the user in the AR/VR space sees movement of the laser pointer. The user receives feedback from interactions with the computing device 950 in the AR/VR environment on the computing device 950 or on the AR/VR headset 990.

In some embodiments, a computing device 950 may include a touchscreen. For example, a user can interact with the touchscreen in a particular manner that can mimic what happens on the touchscreen with what happens in the AR/VR space. For example, a user may use a pinching-type motion to zoom content displayed on the touchscreen. This pinching-type motion on the touchscreen can cause information provided in the AR/VR space to be zoomed. In another example, the computing device may be rendered as a virtual book in a computer-generated, 3D environment. In the AR/VR space, the pages of the book can be displayed in the AR/VR space and the swiping of a finger of the user across the touchscreen can be interpreted as turning/flipping a page of the virtual book. As each page is turned/flipped, in addition to seeing the page contents change, the user may be provided with audio feedback, such as the sound of the turning of a page in a book.

In some embodiments, one or more input devices in addition to the computing device (e.g., a mouse, a keyboard) can be rendered in a computer-generated, 3D environment. The rendered input devices (e.g., the rendered mouse, the rendered keyboard) can be used as rendered in the AR/VR space to control objects in the AR/VR space.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

Further to the descriptions above, a user is provided with controls allowing the user to make an election as to both if and when systems, programs, devices, networks, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that user information is removed. For example, a user's identity may be treated so that no user information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

The computer system (e.g., computing device) may be configured to wirelessly communicate with a network server over a network via a communication link established with the network server using any known wireless communications technologies and protocols including radio frequency (RF), microwave frequency (MWF), and/or infrared frequency (IRF) wireless communications technologies and protocols adapted for communication over the network.

In accordance with aspects of the disclosure, implementations of various techniques described herein may be implemented in digital electronic circuitry, or in computer hardware, firmware, software, or in combinations of them. Implementations may be implemented as a computer program product (e.g., a computer program tangibly embodied in an information carrier, a machine-readable storage device, a computer-readable medium, a tangible computer-readable medium), for processing by, or to control the operation of, data processing apparatus (e.g., a programmable processor, a computer, or multiple computers). In some implementations, a tangible computer-readable storage medium may be configured to store instructions that when executed cause a processor to perform a process. A computer program, such as the computer program(s) described above, may be written in any form of programming language, including compiled or interpreted languages, and may be deployed in any form, including as a standalone program or as a module, component, subroutine, or other unit suitable for use in a computing environment. A computer program may be deployed to be processed on one computer or on multiple computers at one site or distributed across multiple sites and interconnected by a communication network.

Specific structural and functional details disclosed herein are merely representative for purposes of describing example embodiments. Example embodiments, however, may be embodied in many alternate forms and should not be construed as limited to only the embodiments set forth herein.

The terminology used herein is for the purpose of describing particular embodiments only and is not intended to be limiting of the embodiments. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of the stated features, steps, operations, elements, and/or components, but do not preclude the presence or addition of one or more other features, steps, operations, elements, components, and/or groups thereof.

It will be understood that when an element is referred to as being "coupled," "connected," or "responsive" to, or "on," another element, it can be directly coupled, connected, or responsive to, or on, the other element, or intervening elements may also be present. In contrast, when an element is referred to as being "directly coupled," "directly connected," or "directly responsive" to, or "directly on," another element, there are no intervening elements present. As used herein the term "and/or" includes any and all combinations of one or more of the associated listed items.

Spatially relative terms, such as "beneath," "below," "lower," "above," "upper," and the like, may be used herein for ease of description to describe one element or feature in relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 70 degrees or at other orientations) and the spatially relative descriptors used herein may be interpreted accordingly.

Example embodiments of the concepts are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments of the described concepts should not be construed as limited to the particular shapes of regions illustrated herein but are to include deviations in shapes that result, for example, from manufacturing. Accordingly, the regions illustrated in the figures are schematic in nature and their shapes are not intended to illustrate the actual shape of a region of a device and are not intended to limit the scope of example embodiments.

It will be understood that although the terms "first," "second," etc. may be used herein to describe various elements, these elements should not be limited by these terms. These terms are only used to distinguish one element from another. Thus, a "first" element could be termed a "second" element without departing from the teachings of the present embodiments.

Unless otherwise defined, the terms (including technical and scientific terms) used herein have the same meaning as commonly understood by one of ordinary skill in the art to which these concepts belong. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

While certain features of the described implementations have been illustrated as described herein, many modifications, substitutions, changes, and equivalents will now occur to those skilled in the art.

It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components, and/or features of the different implementations described.

## Claims

1. A computer-implemented method, comprising:
generating (825) a screen capture user interface (400) for display on a display of a computing device, including:
generating a first section (410) of the screen capture user interface providing for selection of a first capture mode or a second capture mode, and
generating a second section (420) of the screen capture user interface providing for selection of a screen capture area;
displaying the screen capture user interface on the display of the computing device, such that the screen capture user interface floats on the display;
detecting selection of a screen capture mode on the screen capture user interface (400); and
operating (840) in the selected capture mode in response to detecting the selection of the screen capture mode, including:
triggering operation in the first capture mode in response to detection of selection (830) of the first capture mode, the first capture mode being a screenshot mode for capture of still image content output by the display of the computing device; and
triggering operation in the second capture mode in response to detection of selection (835) of the second capture mode, the second capture mode being a screen recording mode for capture of moving image content output by the display,
wherein operating in the selected screen capture mode in response to detecting the selection of the screen capture mode further includes:
operating in the second capture mode and capturing a screen recording of the moving image content output in a screen recording capture area of the display in response to detection of the selection of the second capture mode,
detecting a selection of the first capture mode on the screen capture user interface (400) while operating in the second capture mode, and
triggering operation in the first capture mode and capturing a screenshot while capturing the screen recording.

2. The computer-implemented method of claim 1, wherein triggering operation in the second capture mode includes triggering screen recording of video content including at least a portion of the moving image content output by the display and audio content associated with the video content.

3. The computer-implemented method of claim 2, wherein triggering screen recording of video content includes triggering operation of a microphone of the computing device and recording at least the portion of the moving image content output by the display and the audio content detected by the microphone.

4. The computer-implemented method of any of claims 1 to 3, wherein generating the second section of the screen capture user interface includes providing for selection of a full screen capture function, a custom capture function, or a window capture function.

5. The computer-implemented method of claim 4, wherein detecting selection of the screen capture mode includes detecting selection of the custom capture function, the method further comprising defining a capture area associated with the display of content, including:
detecting a point input identifying an initial capture point of the capture area;
detecting a drag input from the point input;
detecting a release of the point input identifying a final capture point of the capture area; and
defining the capture area based on a trajectory and a distance between the initial capture point and the final capture point.

6. The computer-implemented method of claim 5, wherein defining the capture area also includes:
detecting a first adjustment input at at least one of a corner of a boundary defining the capture area or a side of the boundary of the capture area; and
adjusting at least one of a size or a shape of the capture area in response to the detected first adjustment input.

7. The computer-implemented method of claim 5 or claim 6, wherein defining the capture area also includes:
detecting a second adjustment input within the boundary of the capture area; and
adjusting content displayed within the boundary of the capture area in response to the second adjustment input.

8. The computer-implemented method of any of claims 1 to 7, wherein detecting selection of the first capture mode while operating in the second capture mode includes detecting selection of a custom capture function defining a screenshot capture area within the screen recording, including:
detecting a point input identifying an initial capture point of the screenshot capture area;
detecting a drag input from the point input;
detecting a release of the point input identifying a final capture point of the screenshot capture area; and
defining the screenshot capture area based on a trajectory and a distance between the initial capture point and the final capture point.

9. The computer-implemented method of any of claims 1 to 8, wherein triggering operation in the first mode further comprises:
detecting selection of a screen capture area;
capturing a screenshot of screen content included in the selected screen capture area in response to detecting the selection of the screen capture area; and
storing the captured screenshot in a clipboard storage area of the computing device.

10. The computer-implemented method of any of claims 1 to 9, wherein triggering operation in the second capture mode comprises accessing a GPU of the computing device and recording one or more frames of the moving image content from the GPU.

11. The computer-implemented method of any of claims 1 to 10, wherein initiating the screen capture operation includes:
accessing predefined permission data; and
triggering the operation in the selected capture mode in accordance with the permission data.

12. The computer-implemented method of any of claims 1 to 11, further comprising:
detecting completion of the screen capture operation; and
generating and triggering for output by the display a quick action user interface in response to detecting completion of the screen capture operation, the quick action user interface providing for selection of one of a plurality of actions associated with the captured screen content.

13. The computer-implemented method of any of claims 1 to 12, wherein:
detecting the selection of a screen capture mode comprises detecting, by an operating system of a computing device, the selection of a screen capture mode;
operating in the selected capture mode in response to detecting the selection of the screen capture mode comprises, in response to detecting the selection of the screen capture mode, triggering operation of a content manager of the operating system in the selected screen capture mode and initiating a screen capture operation;
triggering operation in a first capture mode comprises triggering operation of the content manager in a first capture mode; and
triggering operation in a second capture mode comprises triggering operation of the content manager in a second capture mode.

14. The computer-implemented method of any of claims 1 to 13, wherein displaying the screen capture user interface on the display of the computing device comprises floating a display of the screen capture user interface on the display of the computing device.

15. A system, comprising:
a display;
at least one processor; and
a memory storing instructions that, when executed by the at least one processor, cause the system to perform the method of any one of claims 1 to 14.

## Patentansprüche

1. Computerimplementiertes Verfahren, umfassend:
Erzeugen (825) einer Bildschirmerfassungs-Benutzerschnittstelle (400) zur Anzeige auf einem Display einer Rechenvorrichtung, was Folgendes beinhaltet:
Erzeugen eines ersten Abschnitts (410) der Bildschirmerfassungs-Benutzerschnittstelle, der die Auswahl eines ersten Erfassungsmodus oder eines zweiten Erfassungsmodus bereitstellt, und
Erzeugen eines zweiten Abschnitts (420) der Bildschirmerfassungs-Benutzerschnittstelle, der die Auswahl eines Bildschirmerfassungsbereichs bereitstellt;
Anzeigen der Bildschirmerfassungs-Benutzerschnittstelle auf dem Display der Rechenvorrichtung derart, dass sich die Bildschirmerfassungs-Benutzerschnittstelle frei auf dem Display bewegt;
Erkennen der Auswahl eines Bildschirmerfassungsmodus auf der Bildschirmerfassungs-Benutzerschnittstelle (400); und
Betrieb (840) in dem ausgewählten Erfassungsmodus als Reaktion auf das Erkennen der Auswahl des Bildschirmerfassungsmodus, was Folgendes beinhaltet:
Auslösen des Betriebs in dem ersten Erfassungsmodus als Reaktion auf die Erkennung der Auswahl (830) des ersten Erfassungsmodus, wobei der erste Erfassungsmodus ein Screenshot-Modus zum Erfassen von Standbildinhalten ist, die von dem Display der Rechenvorrichtung ausgegeben werden; und
Auslösen des Betriebs in dem zweiten Erfassungsmodus als Reaktion auf die Erkennung der Auswahl (835) des zweiten Erfassungsmodus, wobei der zweite Erfassungsmodus ein Bildschirmaufzeichnungsmodus zum Erfassen von bewegten Bildinhalten ist, die von dem Display ausgegeben werden,
wobei der Betrieb in dem ausgewählten Bildschirmerfassungsmodus als Reaktion auf das Erkennen der Auswahl des Bildschirmerfassungsmodus ferner Folgendes beinhaltet:
Betrieb in dem zweiten Erfassungsmodus und Erfassen einer Bildschirmaufzeichnung der in einem Bildschirmaufzeichnungs-Erfassungsbereich des Displays ausgegebenen bewegten Bildinhalte als Reaktion auf das Erkennen der Auswahl des zweiten Erfassungsmodus,
Erkennen einer Auswahl des ersten Erfassungsmodus auf der Bildschirmerfassungs-Benutzerschnittstelle (400) während des Betriebs in dem zweiten Erfassungsmodus, und
Auslösen des Betriebs in dem ersten Erfassungsmodus und Erfassen eines Screenshots bei gleichzeitigem Erfassen der Bildschirmaufzeichnung.

2. Computerimplementiertes Verfahren nach Anspruch 1, wobei das Auslösen des Betriebs in dem zweiten Erfassungsmodus das Auslösen einer Bildschirmaufzeichnung von Videoinhalten beinhaltet, die mindestens einen Teil der von dem den Videoinhalten zugeordneten Display ausgegebenen bewegten Bildinhalte und den Videoinhalten zugeordnete Audioinhalte beinhalten.

3. Computerimplementiertes Verfahren nach Anspruch 2, wobei das Auslösen einer Bildschirmaufzeichnung von Videoinhalten das Auslösen des Betriebs eines Mikrofons der Rechenvorrichtung und das Aufzeichnen mindestens des Teils der von dem Display ausgegebenen bewegten Bildinhalte und der durch das Mikrofon erkannten Audioinhalte beinhaltet.

4. Computerimplementiertes Verfahren nach einem der Ansprüche 1 bis 3, wobei das Erzeugen des zweiten Abschnitts der Bildschirmaufzeichnungs-Benutzerschnittstelle das Bereitstellen einer Vollbilderfassungsfunktion, einer benutzerdefinierten Erfassungsfunktion oder einer Fenstererfassungsfunktion zur Auswahl beinhaltet.

5. Computerimplementiertes Verfahren nach Anspruch 4, wobei das Erkennen der Auswahl des Bildschirmerfassungsmodus das Erkennen der Auswahl der benutzerdefinierten Erfassungsfunktion beinhaltet, wobei das Verfahren ferner das Definieren eines dem Anzeigen von Inhalten zugeordneten Erfassungsbereichs umfasst, das Folgendes beinhaltet:
Erkennen einer Punkteingabe, die einen Erfassungsanfangspunkt des Erfassungsbereichs identifiziert;
Erkennen einer Zieheingabe ab der Punkteingabe;
Erkennen einer Freigabe der Punkteingabe, die einen Erfassungsendpunkt des Erfassungsbereichs identifiziert; und
Definieren des Erfassungsbereichs basierend auf einer Bewegungsbahn und einem Abstand zwischen dem Erfassungsanfangspunkt und dem Erfassungsendpunkt.

6. Computerimplementiertes Verfahren nach Anspruch 5, wobei das Definieren des Erfassungsbereichs außerdem Folgendes beinhaltet:
Erkennen einer ersten Einstelleingabe an mindestens einer Ecke einer Grenze, die den Erfassungsbereich definiert, oder an einer Seite der Grenze des Erfassungsbereichs; und
Einstellen mindestens einer von einer Größe oder einer Form des Erfassungsbereichs als Reaktion auf die erfasste erste Einstelleingabe.

7. Computerimplementiertes Verfahren nach Anspruch 5 oder Anspruch 6, wobei das Definieren des Erfassungsbereichs außerdem Folgendes beinhaltet:
Erkennen einer zweiten Einstelleingabe innerhalb der Grenze des Erfassungsbereichs; und
Einstellen von innerhalb der Grenze des Erfassungsbereichs angezeigten Inhalten als Reaktion auf die zweite Einstelleingabe.

8. Computerimplementiertes Verfahren nach einem der Ansprüche 1 bis 7, wobei das Erkennen der Auswahl des ersten Erfassungsmodus während des Betriebs in dem zweiten Erfassungsmodus das Erkennen der Auswahl einer benutzerdefinierten Erfassungsfunktion beinhaltet, die einen Screenshot-Erfassungsbereich innerhalb der Bildschirmaufzeichnung definiert, was Folgendes beinhaltet:
Erkennen einer Punkteingabe, die einen Erfassungsanfangspunkt des Screenshot-Erfassungsbereichs identifiziert;
Erkennen einer Zieheingabe ab der Punkteingabe;
Erkennen einer Freigabe der Punkteingabe, die einen Erfassungsendpunkt des Screenshot-Erfassungsbereichs identifiziert; und
Definieren des Screenshot-Erfassungsbereichs basierend auf einer Bewegungsbahn und einem Abstand zwischen dem Erfassungsanfangspunkt und dem Erfassungsendpunkt.

9. Computerimplementiertes Verfahren nach einem der Ansprüche 1 bis 8, wobei das Auslösen des Betriebs in dem ersten Modus ferner Folgendes umfasst:
Erkennen der Auswahl eines Bildschirmerfassungsbereichs;
Erfassen eines Screenshots von in dem ausgewählten Bildschirmerfassungsbereich beinhalteten Bildschirminhalten als Reaktion auf das Erkennen der Auswahl des Bildschirmerfassungsbereichs; und
Speichern des erfassten Screenshots in einem Zwischenablage-Speicherbereich der Rechenvorrichtung.

10. Computerimplementiertes Verfahren nach einem der Ansprüche 1 bis 9, wobei das Auslösen des Betriebs in dem zweiten Erfassungsmodus das Zugreifen auf eine GPU der Rechenvorrichtung und das Aufzeichnen eines oder mehrerer Einzelbilder der bewegten Bildinhalte von der GPU umfasst.

11. Computerimplementiertes Verfahren nach einem der Ansprüche 1 bis 10, wobei das Auslösen des Bildschirmerfassungsbetriebs Folgendes beinhaltet:
Zugreifen auf vordefinierte Berechtigungsdaten; und
Auslösen des Betriebs in dem ausgewählten Erfassungsmodus in Übereinstimmung mit den Berechtigungsdaten.

12. Computerimplementiertes Verfahren nach einem der Ansprüche 1 bis 11, ferner umfassend:
Erkennen des Abschlusses des Bildschirmerfassungsbetriebs; und
Erzeugen einer schnell reagierenden Benutzerschnittstelle und Auslösen von deren Ausgabe durch das Display als Reaktion auf das Erkennen des Abschlusses des Bildschirmerfassungsbetriebs, wobei die schnell reagierende Benutzerschnittstelle eine von einer Vielzahl von Aktionen, die den erfassten Bildschirminhalten zugeordnet sind, bereitstellt.

13. Computerimplementiertes Verfahren nach einem der Ansprüche 1 bis 12, wobei:
das Erkennen der Auswahl eines Bildschirmerfassungsmodus das Erkennen der Auswahl eines Bildschirmerfassungsmodus durch ein Betriebssystem einer Rechenvorrichtung umfasst;
der Betrieb in dem ausgewählten Erfassungsmodus als Reaktion auf das Erkennen der Auswahl des Bildschirmerfassungsmodus das Auslösen des Betriebs eines Inhaltsmanagers des Betriebssystems in dem ausgewählten Bildschirmerfassungsmodus und das Initiieren eines Bildschirmerfassungsbetriebs als Reaktion auf das Erkennen der Auswahl des Bildschirmerfassungsmodus umfasst;
das Auslösen des Betriebs in einem ersten Erfassungsmodus, das Auslösen des Betriebs des Inhaltsmanagers in einem ersten Erfassungsmodus umfasst; und
das Auslösen des Betriebs in einem zweiten Erfassungsmodus das Auslösen des Betriebs des Inhaltsmanagers in einem zweiten Erfassungsmodus umfasst.

14. Computerimplementiertes Verfahren nach einem der Ansprüche 1 bis 13, wobei das Anzeigen der Bildschirmerfassungs-Benutzerschnittstelle auf dem Display der Rechenvorrichtung das freie Bewegen einer Anzeige der Bildschirmerfassungs-Benutzerschnittstelle auf dem Display der Rechenvorrichtung umfasst.

15. System, umfassend:
ein Display; und
mindestens einen Prozessor; und
einen Speicher, der Anweisungen speichert, die bei Ausführung durch den mindestens einen Prozessor das System veranlassen, das Verfahren nach einem der Ansprüche 1 bis 14 durchzuführen.

## Revendications

1. Procédé mis en œuvre par ordinateur, comprenant :
la génération (825) d'une interface utilisateur de capture d'écran (400) à afficher sur un dispositif d'affichage d'un dispositif informatique, comportant :
la génération d'une première section (410) de l'interface utilisateur de capture d'écran permettant la sélection d'un premier mode de capture ou d'un second mode de capture, et
la génération d'une seconde section (420) de l'interface utilisateur de capture d'écran permettant la sélection d'une zone de capture d'écran ;
l'affichage de l'interface utilisateur de capture d'écran sur le dispositif d'affichage du dispositif informatique, de sorte que l'interface utilisateur de capture d'écran flotte sur le dispositif d'affichage ;
la détection de la sélection d'un mode de capture d'écran sur l'interface utilisateur de capture d'écran (400) ; et
le fonctionnement (840) dans le mode de capture sélectionné en réponse à la détection de la sélection du mode de capture d'écran, comportant :
le déclenchement du fonctionnement dans le premier mode de capture en réponse à la détection de la sélection (830) du premier mode de capture, le premier mode de capture étant un mode de copie d'écran pour la capture d'un contenu d'image fixe délivré en sortie par le dispositif d'affichage du dispositif informatique ; et
le déclenchement du fonctionnement dans le second mode de capture en réponse à la détection de la sélection (835) du second mode de capture, le second mode de capture étant un mode d'enregistrement d'écran pour la capture de contenu d'image animée délivré en sortie par le dispositif d'affichage,
dans lequel le fonctionnement dans le mode de capture d'écran sélectionné en réponse à la détection de la sélection du mode de capture d'écran comporte également :
le fonctionnement dans le second mode de capture et la capture d'un enregistrement d'écran du contenu d'image animée délivré en sortie dans une zone de capture d'enregistrement d'écran du dispositif d'affichage en réponse à la détection de la sélection du second mode de capture,
la détection d'une sélection du premier mode de capture sur l'interface utilisateur de capture d'écran (400) tout en fonctionnant dans le second mode de capture, et
le déclenchement du fonctionnement dans le premier mode de capture et la capture d'une copie d'écran lors de la capture de l'enregistrement d'écran.

2. Procédé mis en œuvre par ordinateur selon la revendication 1, dans lequel le déclenchement du fonctionnement dans le second mode de capture comporte le déclenchement de l'enregistrement d'écran de contenu vidéo comportant au moins une partie du contenu d'image animée délivré en sortie par le dispositif d'affichage et d'un contenu audio associé au contenu vidéo.

3. Procédé mis en œuvre par ordinateur selon la revendication 2, dans lequel le déclenchement de l'enregistrement d'écran de contenu vidéo comporte le déclenchement du fonctionnement d'un microphone du dispositif informatique et l'enregistrement d'au moins la partie du contenu d'image animée délivré en sortie par le dispositif d'affichage et du contenu audio détecté par le microphone.

4. Procédé mis en œuvre par ordinateur selon l'une quelconque des revendications 1 à 3, dans lequel la génération de la seconde section de l'interface utilisateur de capture d'écran comporte le fait de permettre la sélection d'une fonction de capture plein écran, d'une fonction de capture personnalisée ou d'une fonction de capture de fenêtre.

5. Procédé mis en œuvre par ordinateur selon la revendication 4, dans lequel la détection de la sélection du mode de capture d'écran comporte la détection de la sélection de la fonction de capture personnalisée, le procédé comprenant également la définition d'une zone de capture associée à l'affichage de contenu, comportant :
la détection d'une entrée de point identifiant un point de capture initial de la zone de capture ;
la détection d'une entrée de traînée à partir de l'entrée de point ;
la détection d'une libération de l'entrée de point identifiant un point de capture final de la zone de capture ; et
la définition de la zone de capture sur la base d'une trajectoire et d'une distance entre le point de capture initial et le point de capture final.

6. Procédé mis en œuvre par ordinateur selon la revendication 5, dans lequel la définition de la zone de capture comporte également :
la détection d'une première entrée de réglage au niveau d'au moins l'un d'un coin d'une limite définissant la zone de capture ou d'un côté de la limite de la zone de capture ; et
le réglage d'au moins l'une d'une taille ou d'une forme de la zone de capture en réponse à la première entrée de réglage détectée.

7. Procédé mis en œuvre par ordinateur selon la revendication 5 ou la revendication 6, dans lequel la définition de la zone de capture comporte également :
la détection d'une seconde entrée de réglage dans la limite de la zone de capture ; et
le réglage d'un contenu affiché dans la limite de la zone de capture en réponse à la seconde entrée de réglage.

8. Procédé mis en œuvre par ordinateur selon l'une quelconque des revendications 1 à 7, dans lequel la détection de la sélection du premier mode de capture pendant le fonctionnement dans le second mode de capture comporte la détection de la sélection d'une fonction de capture personnalisée définissant une zone de capture de copie d'écran dans l'enregistrement d'écran, comportant :
la détection d'une entrée de point identifiant un point de capture initial de la zone de capture de copie d'écran ;
la détection d'une entrée de traînée à partir de l'entrée de point ;
la détection d'une libération de l'entrée de point identifiant un point de capture final de la zone de capture de copie d'écran ; et
la définition de la zone de capture de copie d'écran sur la base d'une trajectoire et d'une distance entre le point de capture initial et le point de capture final.

9. Procédé mis en œuvre par ordinateur selon l'une quelconque des revendications 1 à 8, dans lequel le déclenchement du fonctionnement dans le premier mode comprend également :
la détection de la sélection d'une zone de capture d'écran ;
la capture d'une copie d'écran de contenu d'écran inclus dans la zone de capture d'écran sélectionnée en réponse à la détection de la sélection de la zone de capture d'écran ; et
le stockage de la copie d'écran capturée dans une zone de stockage de presse-papiers du dispositif informatique.

10. Procédé mis en œuvre par ordinateur selon l'une quelconque des revendications 1 à 9, dans lequel le déclenchement du fonctionnement dans le second mode de capture comprend l'accès à un GPU du dispositif informatique et l'enregistrement d'une ou de plusieurs trames du contenu d'image animée à partir du GPU.

11. Procédé mis en œuvre par ordinateur selon l'une quelconque des revendications 1 à 10, dans lequel le lancement de l'opération de capture d'écran comporte :
l'accès à des données d'autorisation prédéfinies ; et
le déclenchement du fonctionnement dans le mode de capture sélectionné conformément aux données d'autorisation.

12. Procédé mis en œuvre par ordinateur selon l'une quelconque des revendications 1 à 11, comprenant également :
la détection de l'achèvement de l'opération de capture d'écran ; et
la génération et le déclenchement pour la livraison en sortie par le dispositif d'affichage d'une interface utilisateur d'action rapide en réponse à la détection de l'achèvement de l'opération de capture d'écran, l'interface utilisateur d'action rapide permettant la sélection d'une action parmi une pluralité d'actions associées au contenu d'écran capturé.

13. Procédé mis en œuvre par ordinateur selon l'une quelconque des revendications 1 à 12, dans lequel :
la détection de la sélection d'un mode de capture d'écran comprend la détection, par un système d'exploitation d'un dispositif informatique, de la sélection d'un mode de capture d'écran ;
le fonctionnement dans le mode de capture sélectionné en réponse à la détection de la sélection du mode de capture d'écran comprend, en réponse à la détection de la sélection du mode de capture d'écran, le déclenchement du fonctionnement d'un gestionnaire de contenu du système d'exploitation dans le mode de capture d'écran sélectionné et le lancement d'une opération de capture d'écran ;
le déclenchement du fonctionnement dans un premier mode de capture comprend le déclenchement du fonctionnement du gestionnaire de contenu dans un premier mode de capture ; et
le déclenchement du fonctionnement dans un second mode de capture comprend le déclenchement du fonctionnement du gestionnaire de contenu dans un second mode de capture.

14. Procédé mis en œuvre par ordinateur selon l'une quelconque des revendications 1 à 13, dans lequel l'affichage de l'interface utilisateur de capture d'écran sur le dispositif d'affichage du dispositif informatique comprend le fait de faire flotter un affichage de l'interface utilisateur de capture d'écran sur le dispositif d'affichage du dispositif informatique.

15. Système, comprenant :
un dispositif d'affichage ;
au moins un processeur ; et
une mémoire stockant des instructions qui, lorsqu'elles sont exécutées par l'au moins un processeur, amènent le système à réaliser le procédé selon l'une quelconque des revendications 1 à 14.
